# EUROPEAN PATENT APPLICATION

(11) **EP 4 682 673 A1**
(43) Date of publication of application: **21.01.2026**
(21) Application number: 24797288.8
(22) Date of filing: 26.03.2024
(51) Int. Cl.: G06F 1/16, H02P 7/03, H02P 8/14

(54) **ROLLABLE ELECTRONIC DEVICE COMPRISING MAGNET**

(30) Priority: 24.04.2023 KR 20230053237; 22.05.2023 KR 20230065745
(71) Applicant: Samsung Electronics Co., Ltd., Suwon-si, Gyeonggi-do 16677 (KR)
(72) Inventor: LEE, Soogyu, Suwon-si, Gyeonggi-do 16677 (KR); KIM, Minsoo, Suwon-si, Gyeonggi-do 16677 (KR); KIM, Sangheon, Suwon-si, Gyeonggi-do 16677 (KR); BAE, Jaehyun, Suwon-si, Gyeonggi-do 16677 (KR); WOO, Kwangtaek, Suwon-si, Gyeonggi-do 16677 (KR); LEE, Jiwoo, Suwon-si, Gyeonggi-do 16677 (KR); HAN, Yonggil, Suwon-si, Gyeonggi-do 16677 (KR)
(74) Representative: Walaski, Jan Filip
(86) International application number: PCT/KR2024/003762
(87) International publication number: WO 2024/225626

(57) **Abstract**

According to various embodiments, an electronic device comprises: a first housing; a second housing coupled to be slidable from the first housing; a flexible display arranged to be supported by the first housing and the second housing; a driving motor which is arranged in the first housing and comprises a pinion gear; a rack gear which is arranged in the second housing and gear-coupled to the pinion gear; at least one magnet arranged in the first housing; a first magnetic force reaction member which is arranged in the second housing to be affected by the magnetic force of the at least one magnet in a slide-in state; and a second magnetic force reaction member which is arranged in the second housing to be affected by the magnetic force of the at least one magnet in a slide-out state, wherein the second housing can be maintained at the position thereof due to an attractive force between the at least one magnet and the first and second magnetic force reaction members during the slide-in and slide-out states.

## Description

### [Technical Field]

Embodiments of the disclosure relate to a rollable electronic device including a magnet.

### [Background Art]

Electronic devices are gradually becoming slimmer and more rigid, being enhanced in design aspects, and being improved to differentiate functional elements thereof. Electronic devices are gradually evolving from a uniform rectangular shape to diverse shapes. An electronic device may have a transformable structure that is convenient to carry and enables the use of a large-screen display. The electronic device may have a structure capable of making the display area of a flexible display (e.g., a rollable display) variable through supporting by housings that operate in a sliding manner relative to each other (e.g., a rollable structure or a slidable structure). Such an electronic device may require a structure for preventing damage to internal components caused by external impacts such as a drop.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

According to various embodiments, an electronic device may include a rollable electronic device (e.g., a slidable electronic device) in which the display area of a flexible display (e.g., a rollable display) may be expanded and/or contracted depending on an operational state. The rollable electronic device may include a first housing (e.g., a book cover) and a second housing (e.g., a front cover) that are movably coupled to each other in a manner in which they are at least partially fitted together. For example, the first housing and the second housing may operate to slide relative to each other and support at least a portion of a flexible display (e.g., a rollable display, an expandable display, or a stretchable display). The flexible display may be guided to have a first display area in a slide-in state, and may be guided to have a second display area larger than the first display area in a slide-out state.

The rollable electronic device may include a drive motor including a first gear (e.g., a pinion gear) disposed in the first housing (or the second housing), and a drive mechanism including a second gear (e.g., a rack gear) disposed in the second housing (or the first housing) and meshed with the first gear. For example, as the pinion gear of the drive motor moves along the rack gear, the electronic device may transition to the slide-in state or the slide-out state. In this case, the meshed state between the first gear and the second gear may be maintained, and the slide-in state or the slide-out state of the rollable electronic device may be maintained by a reverse driving force.

However, in the rollable electronic device, particularly in the slide-out state, when an external impact such as a drop is applied, malfunction may be caused due to damage or play occurring in the meshed gears.

Embodiments of the disclosure may provide a rollable electronic device including a magnet configured to reduce damage caused by external impacts such as a drop.

Embodiments of the disclosure may provide a rollable electronic device including a magnet that may help improve operational reliability by stably maintaining the slide-in state or the slide-out state.

However, the problems that the disclosure seeks to solve are not limited to the aforementioned problems, and may be expanded in various ways without departing from the spirit and scope of the disclosure.

### [Solution to Problem]

According to various embodiments, an electronic device may include a first housing, a second housing slidably coupled to the first housing, a flexible display disposed to be supported by the first housing and the second housing, a drive motor disposed in the first housing and including a pinion gear, a rack gear disposed in the second housing and meshed with the pinion gear, at least one magnet disposed in the first housing, a first magnetic reaction member disposed in the second housing and configured to be influenced by a magnetic force of the at least one magnet in a slide-in state, and a second magnetic reaction member disposed in the second housing and configured to be influenced by the magnetic force of the at least one magnet in a slide-out state. The second housing may be held in position in the slide-out state and the slide-in state by an attractive force between the at least one magnet and the first and second magnetic reaction members.

According to various embodiments, an electronic device may include a first housing, a second housing slidably coupled to the first housing, a flexible display disposed to be supported by the first housing and the second housing and having a display area variable depending on the slide-in or slide-out of the second housing, a drive motor disposed in the first housing and including a pinion gear, a rack gear disposed in the second housing and meshed with the pinion gear, at least one magnet disposed in the first housing, a first magnetic reaction member disposed in the second housing and configured to be influenced by a magnetic force of the at least one magnet in the slide-in state, a second magnetic reaction member disposed in the second housing and configured to be influenced by the magnetic force of the at least one magnet in the slide-out state, a movement distance detection sensor configured to detect a movement distance of the second housing, and at least one processor configured to control a driving force of the drive motor in response to a movement section of the second housing detected by the movement distance detection sensor.

### [Advantageous Effects of Invention]

A rollable electronic device according to exemplary embodiments of the disclosure may include a position holding structure that uses magnetic force (e.g., attractive force) between magnets to maintain the slide-in state or the slide-out state. The position holding structure may help improve operational reliability of the rollable electronic device by reducing damage and/or play in the drive mechanism caused by external impacts such as a drop, and by stably maintaining the slide-in state or the slide-out state.

In addition, various effects that are directly or indirectly understood from this document may also be provided.

The effects that are capable of being obtained by the disclosure are not limited to those described above, and other effects not described above may be clearly understood by a person ordinarily skilled in the art to which the disclosure belongs based on the following description.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIGS. 2A and 2B are front and rear views of an electronic device according to various embodiments of the disclosure in a slide-in state.
FIGS. 3A and 3B are front and rear views of the electronic device according to various embodiments of the disclosure in a slide-out state.
FIG. 4 is an exploded perspective view of an electronic device according to various embodiments of the disclosure.
FIG. 5 is a perspective view of a movement distance detection sensor according to various embodiments of the disclosure.
FIG. 6A is a view illustrating a configuration of the electronic device according to various embodiments of the disclosure in the slide-in state.
FIG. 6B is a cross-sectional view of the electronic device according to various embodiments of the disclosure taken along line 6b-6b in FIG. 6A.
FIG. 7A is a view illustrating a configuration of the electronic device according to various embodiments of the disclosure in the slide-out state.
FIG. 7B is a cross-sectional view of the electronic device according to various embodiments of the disclosure taken along line 8b-8b in FIG. 8A.
FIG. 8A is a partial cross-sectional view of an electronic device illustrating an initiation time point for transitioning from the slide-in state to the slide-out state according to various embodiments of the disclosure.
FIG. 8B is a partial cross-sectional view of the electronic device illustrating a termination time point immediately before transitioning from the slide-in state to the slide-out state according to various embodiments of the disclosure.
FIG. 8C is a view illustrating an arrangement structure of magnets according to various embodiments of the disclosure.
FIG. 8D is a view illustrating modified shapes of magnets according to various embodiments of the disclosure.
FIG. 9A is a graph illustrating a change in a driver output level of the drive motor depending on a movement section of the second housing, according to various embodiments of the disclosure.
FIG. 9B is a graph illustrating a change in a driving force of the drive motor depending on a movement section of the second housing, according to various embodiments of the disclosure.
FIG. 10A is a graph illustrating a change in a driver output level of the drive motor depending on a movement section of the second housing, according to various embodiments of the disclosure.
FIG. 10B is a graph illustrating a change in a rotational speed of the drive motor depending on a movement section of the second housing, according to various embodiments of the disclosure.
FIG. 11A is a partial cross-sectional view of an electronic device according to various embodiments of the disclosure in the slide-in state.
FIG. 11B is a partial cross-sectional view of the electronic device according to various embodiments of the disclosure in the slid-out state.
FIG. 12 is a flowchart illustrating control of a drive motor when transitioning from the slide-in state to the slide-out state, according to various embodiments of the disclosure.
FIG. 13 is a flowchart illustrating control of the drive motor when transitioning from the slide-out state to the slide-in state, according to various embodiments of the disclosure.

### [Mode for the Invention]

Hereinafter, with reference to the drawings, various example embodiments of the disclosure will be described in greater detail so that those skilled in the art can readily carry out the embodiments. However, the disclosure may be implemented in various different forms and is not limited to the example embodiments described herein. In connection with the description of the drawings, the same or similar reference symbols may be used for identical or similar components. Additionally, in the drawings and related descriptions, descriptions of well-known functions and configurations may be omitted for clarity and brevity.

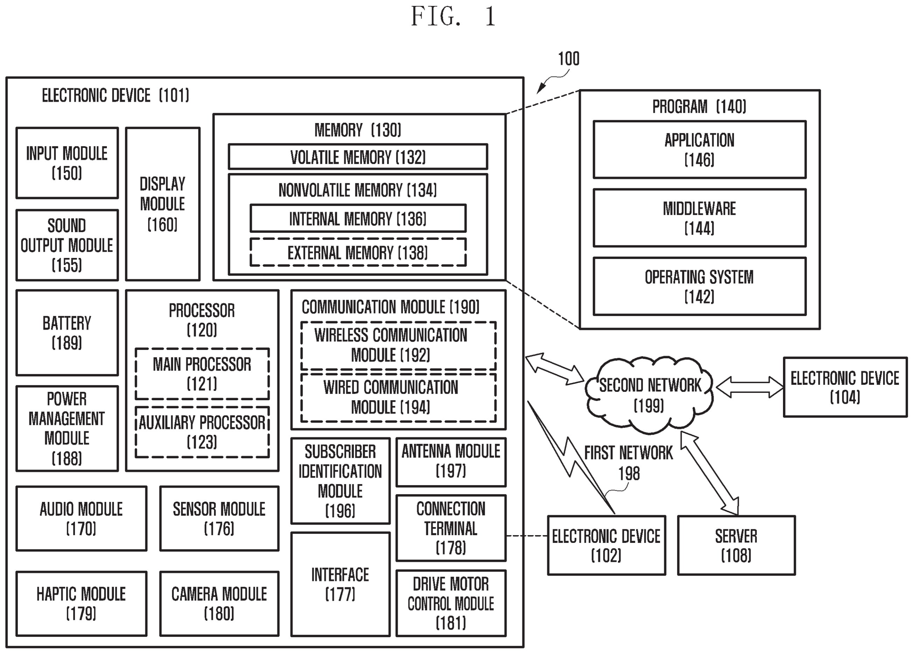

FIG. 1 is a block diagram illustrating an electronic device in a network environment according to various embodiments.

With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

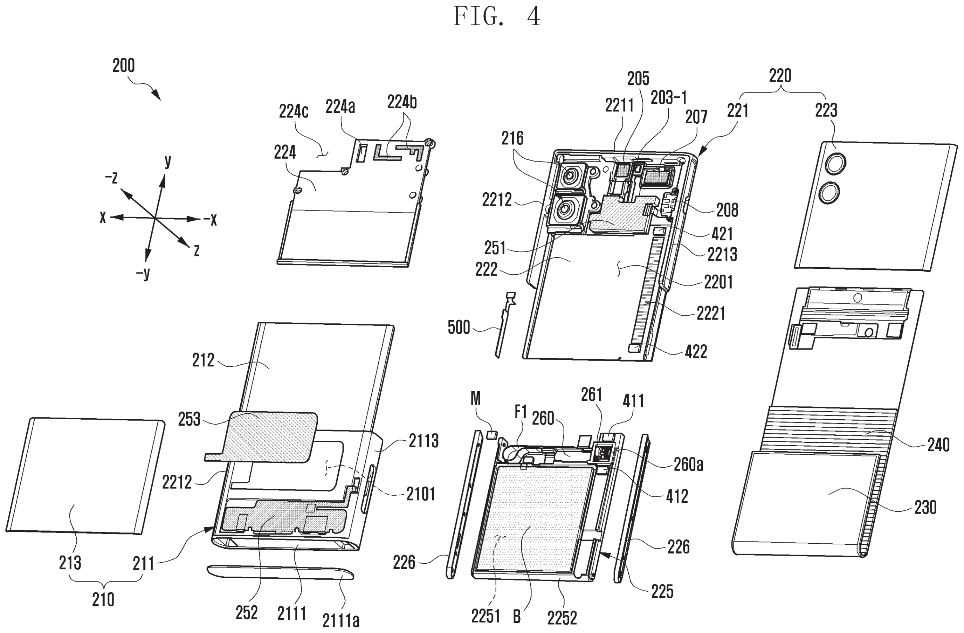

According to various embodiments, the sensor module 176 may include a movement distance detection sensor to detect a movement distance of a second housing (e.g., a second housing 220 in FIG. 4) from a first housing (e.g., a first housing 210 in FIG. 4) of an electronic device (e.g., an electronic device 200 of FIG. 4). In one embodiment, through movement of the second housing 220 from the first housing 210, the sensor module 176 may detect a slide-in state being a first state, a slide-out state being a second state, or an intermediate state being a third state between the slide-in state and the slide-out state. In a certain embodiment, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4). In one embodiment, the electronic device 101 may include a drive motor control module 181 to control the operation of a drive motor (e.g., DC motor or stepping motor) (e.g., drive motor 260 in FIG. 4) disposed inside the electronic device. In an embodiment, the drive motor control module 181 may be replaced by the processor 120.

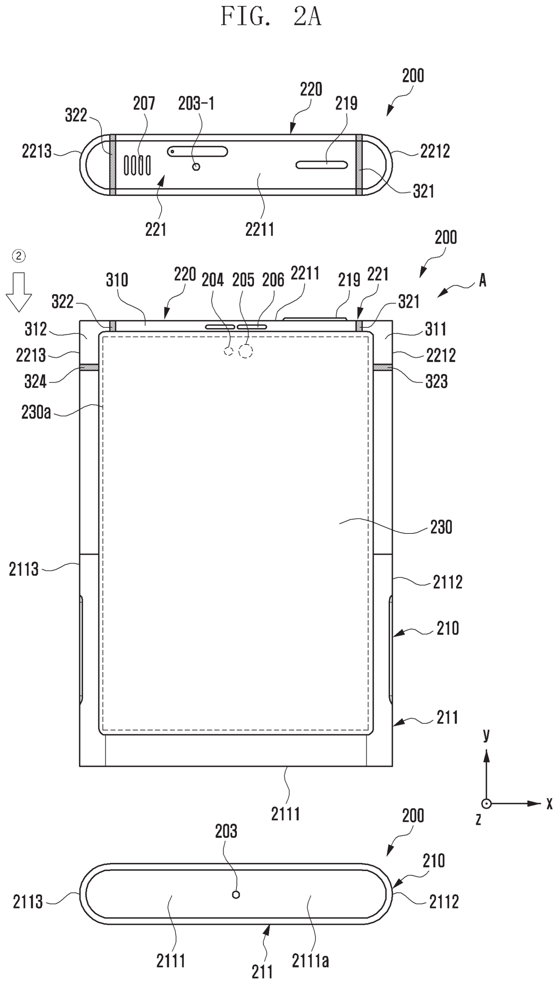

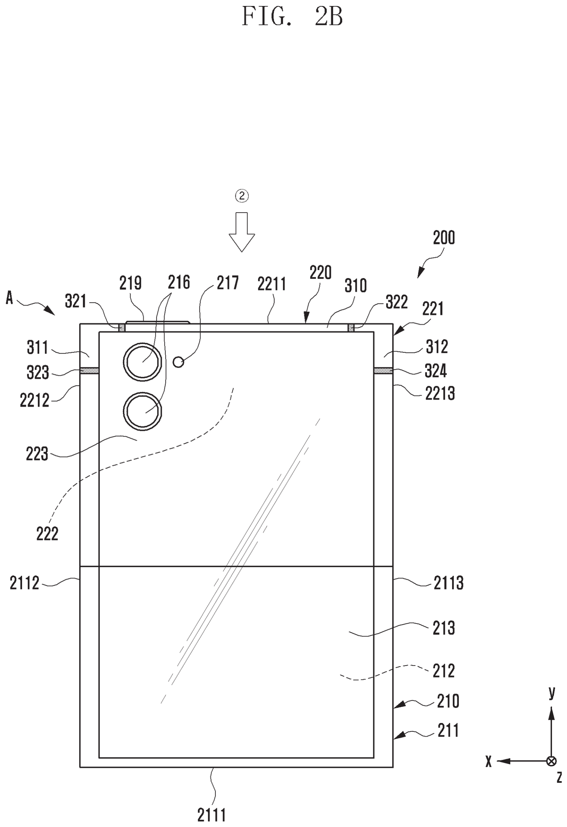

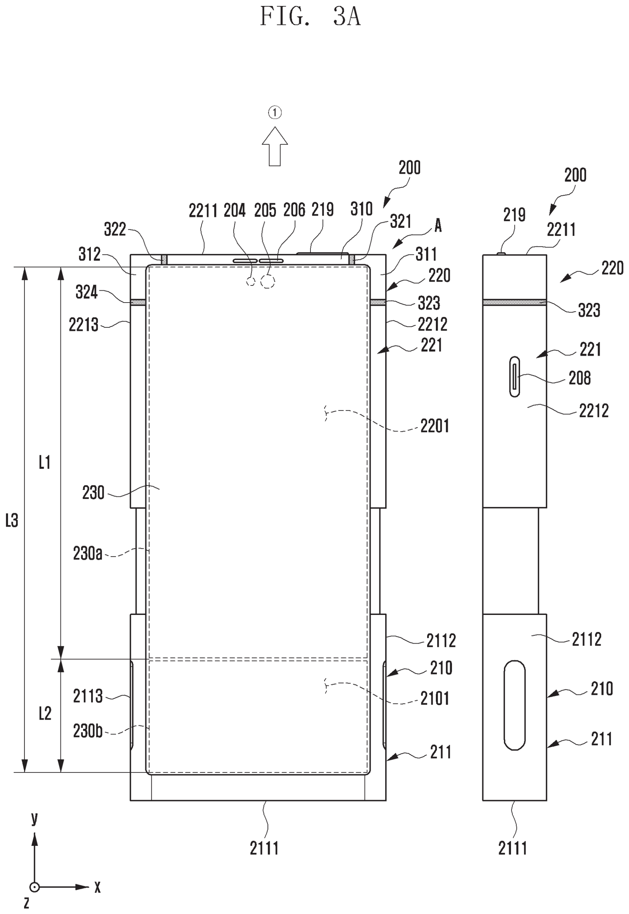

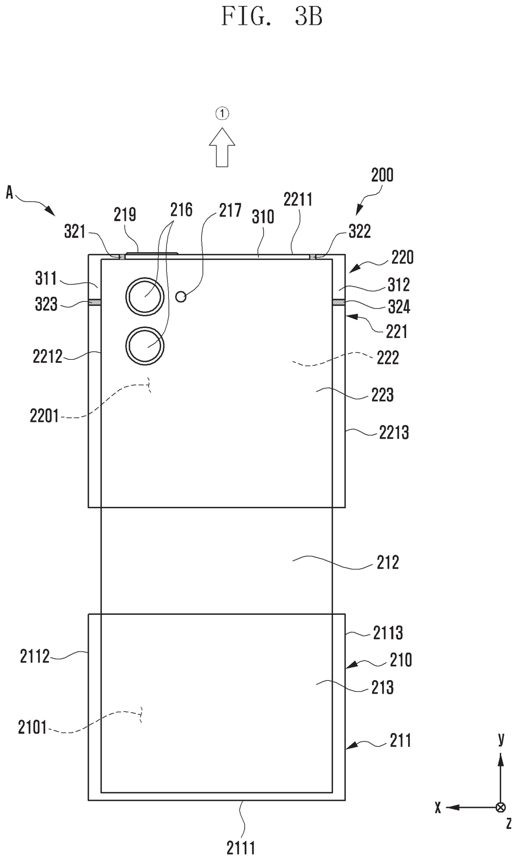

FIGS. 2A and 2B are front and rear views of an electronic device according to various embodiments of the disclosure in a slide-in state. FIGS. 3A and 3B are front and rear views of the electronic device according to various embodiments of the disclosure in a slide-out state.

The electronic device 200 of FIGS. 2A to 3B may be at least partially similar to the electronic device 101 of FIG. 1 or may further include other embodiments of the electronic device.

Referring to FIGS. 2A to 3B, the electronic device 200 (e.g., a rollable electronic device) may include a first housing 210, a second housing 220 coupled to be slidable in a predetermined direction (e.g., in direction ① or direction ②) (e.g., the ±y-axis direction) from the first housing 210, and a flexible display 230 (e.g., a rollable display, an expandable display, or a stretchable display) disposed to be supported by at least a portion of the first and second housings 210 and 220. In an embodiment, the second housing 220 may be slidably coupled to the first housing 210 so as to be slid out in a first direction (direction ①) with respect to the first housing 210 or to be slid in in a second direction (direction ②), which is opposite to the first direction. In an embodiment, the electronic device 200 may transition to the slide-in state (e.g., a retraction state) when at least a portion of the second housing 220 is accommodated in at least a portion of a first space 2101 defined by the first housing 210. In an embodiment, the electronic device 200 may transition to the slide-out state (e.g., an extension state) when at least a portion of the second housing 220 is moved from the first space 2101 in the outward direction (e.g., direction ①). In an embodiment, the electronic device 200 may include a support member (e.g., the support member 240 in FIG. 4) (e.g., a bendable member, a multi-joint hinge module, a multi-bar assembly, or multiple bars). In the slide-out state, the support member may at least partially form the same plane as at least a portion of the second housing 220, and in the slide-in state, the support member may be at least partially accommodated in the first space 2101 of the first housing 210 in a bending manner. In an embodiment, at least a portion of the flexible display 230 may be disposed to be supported by at least a portion of the second housing 220. In an embodiment, the remaining portion of the flexible display 230 may be disposed to be at least partially supported by the support member 240 (e.g., the support member 240 in FIG. 4). In an embodiment, the support member 240 may be disposed in a manner attached to the rear surface of the display 230. According to an embodiment, in the slide-in state, at least a portion of the flexible display 230 may be accommodated into the first space 2101 of the first housing 210 in a bending manner while being supported by the support member (e.g., the support member 240 in FIG. 4), thereby being disposed to be invisible from the outside. In an embodiment, in the slide-out state, at least a portion of the flexible display 230 may move to be visible from the outside while being supported by the support member (e.g., the support member 240 in FIG. 4), which at least partially defines the same plane as the second housing 220.

According to various embodiments, the electronic device 200 may include a first housing 210 including a first side surface member 211 and a second housing 220 including a second side surface member 221. In an embodiment, the first side surface member 211 may include a first side surface 2111 disposed at the bottom side of the electronic device 200 and having a first length, a second side surface 2112 extending in a perpendicular direction (e.g., the y-axis direction) from one end of the first side surface 2111 and having a second length, and a third side surface 2113 extending parallel to the second side surface 2112 from the other end of the first side surface 2111 and having the second length. In an embodiment, the first side surface member 211 may be at least partially made of a conductive member (e.g., metal). In some embodiments, the first side surface member 211 may be formed by coupling a conductive member and a non-conductive member (e.g., polymer). In an embodiment, the first housing 210 may include a first extension member 212 extending from at least a portion of the first side surface member 211 to at least a portion of the first space 2101. In an embodiment, the first extension member 212 may be integrated with the first side surface member 211. In some embodiments, the first extension member 212 may be formed separately from the first side surface member 211 and structurally coupled to the first side surface member 211. In an embodiment, the electronic device 200 may further include a side surface cover 2111a attached to a first side surface 2111.

According to various embodiments, the second side surface member 221 may include a fourth side surface 2211 disposed at the upper side of the electronic device 200 and having a third length, a fifth side surface 2212 extending in a perpendicular direction (e.g., the -y-axis direction) from one end of the fourth side surface 2211 to correspond to the second side surface 2112 and having a fourth length, and a sixth side surface 2213 extending in a direction parallel to the fifth side surface 2212 from the other end of the fourth side surface 2211 to correspond to the third side surface 2113 and having the fourth length. In an embodiment, the second side surface member 221 may be at least partially made of a conductive member (e.g., metal). In some embodiments, the second side surface member 221 may be formed by coupling a conductive member and a non-conductive member (e.g., polymer). In an embodiment, at least a portion of the second side surface member 221 may include a second extension member 222 extending to at least a portion of a second space 2201 of the second housing 220. In an embodiment, the second extension member 222 may be integrated with the second side surface member 221. In some embodiments, the second extension member 222 may be formed separately from the second side surface member 221 and structurally coupled to the second side surface member 221.

According to various embodiments, the second side surface 2112 and the fifth side surface 2212 may be slidably coupled to each other. In an embodiment, the third side surface 2113 and the sixth side surface 2213 may be slidably coupled to each other. In an embodiment, in the slide-in state, a portion of the fifth side surface 2212 may overlap the second side surface 2112, thereby being disposed to be substantially invisible from the outside. In an embodiment, in the slide-in state, the remaining portion of the fifth side surface 2212 may be disposed to be visible from the outside. In some embodiments, in the slide-in state, the fifth side surface 2212 may overlap the second side surface 2112, thereby being disposed to be substantially invisible from the outside. In an embodiment, in the slide-in state, a portion of the sixth side surface 2213 may overlap the third side surface 2113, thereby being disposed to be substantially invisible from the outside. In an embodiment, in the slide-in state, the remaining portion of the sixth side surface 2213 may be disposed to be visible from the outside. In some embodiments, in the slide-in state, the sixth side surface 2213 may overlap the third side surface 2113, thereby being disposed to be substantially invisible from the outside. In an embodiment, a portion of the first extension member 212 may be disposed to be invisible from the outside in the slide-in state. In some embodiments, a portion of the first extension member 212 may be disposed to be visible from the outside in the slide-out state.

According to various embodiments, the first housing 210 may include a first rear surface cover 213 coupled to at least a portion of the first side surface member 211. In an embodiment, the first rear surface cover 213 may be disposed by being coupled to at least a portion of the first extension member 212. In some embodiments, the first rear surface cover 213 may be integrated with the first side surface member 211. In an embodiment, the first rear surface cover 213 may be made of polymer, coated or tinted glass, ceramic, metal (e.g., aluminum, stainless steel (STS), or magnesium), or a combination of at least two of these materials. In some embodiments, the first rear surface cover 213 may extend to at least a portion of the first side surface member 211. In some embodiments, the first rear surface cover 213 may be omitted, and at least a portion of the first extension member 212 may replace the first rear surface cover 213.

According to various embodiments, the second housing 220 may include a second rear surface cover 223 coupled to at least a portion of the second side surface member 221. In an embodiment, the second rear surface cover 223 may be disposed by being coupled to at least a portion of the second extension member 222. In an embodiment, the second rear surface cover 223 may be integrated with the second side surface member 221. In an embodiment, the second rear surface cover 223 may be made of polymer, coated or tinted glass, ceramic, metal (e.g., aluminum, stainless steel (STS), or magnesium), or a combination of at least two of these materials. In some embodiments, the second rear surface cover 223 may extend to at least a portion of the second side surface member 221. In some embodiments, the second rear surface cover 223 may be omitted, and at least a portion of the second extension member 222 may be replaced with the second rear surface cover 223. In an embodiment, the second rear surface cover 223 may be formed of a material suitable for detecting an external environment through at least one camera module 216 and/or sensor module 217 disposed in the inner space 2201 of the second housing 220. For example, the second rear surface cover 223 (e.g., a window cover) may be formed of a glass and/or polymer material, in which at least an area corresponding to the camera module 216 and/or the sensor module 217 is formed to be transparent.

According to various embodiments, the flexible display 230 may include a first portion 230a (e.g., a flat portion) that is always visible from the outside, and a second portion 230b (e.g., a bendable portion or a bending portion) that extends from the first portion 230a and is at least partially bent and accommodated into the first space 2101 of the first housing 210 to be invisible from the outside in the slide-in state. In an embodiment, at least a portion of the first portion 230a may be disposed to be supported by the second housing 220, and at least a portion of the first portion 230a and the second portion 230b may be disposed to be at least partially supported by a support member (e.g., the support member 240 in FIG. 4). In an embodiment, in the state in which the second housing 220 is slid out along the first direction (direction ①), the second portion 230b of the flexible display 230 may define substantially the same plane as the first portion 230a while being supported by the support member (e.g., the support member 240 in FIG. 4), and may be disposed to be visible from the outside. In an embodiment, in the state in which the second housing 220 is slid in along the second direction (direction ②), the second portion 230b of the flexible display 230 may be accommodated in a bending manner into the first space 2101 of the first housing 210 and disposed to be invisible from the outside. Accordingly, the display area of the flexible display 230, may be variable as the second housing 220 is moved in a sliding manner from the first housing 210 along a predetermined direction (e.g., the ±y-axis direction).

According to various embodiments, the length of the flexible display 230 in the sliding direction (e.g., direction ① or direction ②) may vary depending on the sliding movement of the second housing 220, which moves relative to the first housing 210. For example, in the slide-in state, the flexible display 230 may have a first display area corresponding to the first length L1 (e.g., an area corresponding to the first portion 230a). In an embodiment, in the slide-out state, depending on the moving distance of the second housing 220 moved by a second length L2 with respect to the first housing 210, the flexible display 230 may be expanded to have a second display area (e.g., an area including the first portion 230a and the second portion 230b), which corresponds to a third length L3 greater than the first length L1 and is larger than the first display area.

According to various embodiments, the electronic device 200 may include at least one of an input device (e.g., a microphone 203-1) disposed in the second space 2201 of the second housing 220, a sound output device (e.g., a phone call receiver 206 and/or a speaker 207), sensor modules 204 and 217, a camera module (e.g., the first camera module 205 or the second camera module 216), a connector port 208, a key input device 219, or an indicator (not illustrated). In an embodiment, the electronic device 200 may include another input device (e.g., the microphone 203) disposed in the first housing 210. In some embodiments, the electronic device 200 may be configured such that at least one of the above-mentioned components is omitted or other components are additionally included. In some embodiments, at least one of the above-described components may be disposed in the first space 2101 in the first housing 210.

According to various embodiments, the input device may include a microphone 203-1. In some embodiments, the input device (e.g., the microphone 203-1) may include a plurality of microphones arranged to detect the direction of sound. The sound output device may include, for example, a call receiver 206 and a speaker 207. In an embodiment, regardless of the slide-in/slid-out state, the speaker 207 may face the outside through at least one speaker hole provided in the second housing 220 at a position always exposed to the outside (e.g., the fourth side surface 2211). In an embodiment, in the slide-out state, the connector port 208 may face the outside through a connector port hole provided in the second housing 220. In an embodiment, the connector port 208 may be covered to be invisible from the outside in the slide-in state. In some embodiments, in the slide-in state, the connector port 208 may face the outside through an opening provided in the first housing 210 to correspond to the connector port hole. In some embodiments, the call receiver 206 may include a speaker that operates without a separate speaker hole (e.g., a piezo speaker).

According to various embodiments, the sensor modules 204 and 217 may generate electrical signals or data valuescorresponding to an internal operating state or an external environmental state of the electronic device 200. In an embodiment, the sensor modules 204 and 217 may include, for example, a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. In an embodiment, the first sensor module 204 may be disposed under the flexible display 230 in the front surface of the electronic device 200. In an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. In an embodiment, the electronic device 200 may include a flash (not illustrated) located near the second camera module 216. In an embodiment, the camera modules 205 and 216 may include one or more lenses, an image sensor, and/or an image signal processor. In an embodiment, the first camera module 205 may be disposed under the flexible display 230 and may be configured to photograph a subject through a portion of an active area (e.g., a display area) of the flexible display 230.

According to various embodiments, the first camera module 205 among the camera modules and the first sensor module 204 among the sensor modules 204 and 217 may be disposed to detect the external environment through the flexible display 230. For example, the first camera module 205 or the first sensor module 204 may be disposed in the second space 2201 of the second housing 220 to be in contact with the external environment through a transmissive area or a perforated opening provided in the flexible display 230. In an embodiment, the area of the display 230 that faces the first camera module 205 may be configured as the transmissive area having a predetermined transmittance, as a portion of an active area that displays content. In an embodiment, the transmissive area may have a transmittance ranging from about 5% to about 20%. The transmissive area may include an area overlapping an effective area (e.g., a field of view area) of the first camera module 205 through which light imaged by an image sensor to generate an image passes. For example, the transmissive area of the flexible display 230 may include an area having a lower pixel density and/or a lower wire density than the surrounding area. For example, the above-mentioned opening may replace the transmissive area. For example, some camera modules 205 may include an under-display camera (UDC). In some embodiments, some sensor modules 204 may be disposed to perform the functions thereof in the second space 2201 in the second housing 220 without being visually exposed through the flexible display 230.

According to various embodiments, the slide-in operation and/or the slide-out operation of the electronic device 200 may be automatically performed. For example, the slide-in and/or slide-out operation of the electronic device 200 may be executed through meshing between a drive motor (e.g., the drive motor 260 in FIG. 4) having a pinion gear (e.g., the pinion gear 261 in FIG. 4) disposed in the first space 2101 of the first housing 210 and a rack gear (e.g., the rack gear 2221 in FIG. 4) disposed in the second space 2201 of the second housing 220 and meshed with the pinion gear 261. For example, when detecting a triggering signal of transitioning from the slide-in state to the slide-out state or from the slide-out state to the slide-in state, the processor (e.g., the processor 120 in FIG. 1) of the electronic device 200 may operate the drive motor (e.g., the drive motor 260 in FIG. 4) disposed inside the electronic device 200. In an embodiment, the triggering signal may include a signal generated by the selection (e.g., touch) of an object displayed on the flexible display 230 or a signal generated by the operation (e.g., pressing) of a physical button (e.g., a key button) included in the electronic device 200.

According to various embodiments, the electronic device 200 has a structure in which the second housing 220 is slid in and/or slid out with respect to the first housing 210 along the length direction of the electronic device 200 (e.g., a vertical direction) (e.g., the ±y-axis direction), but is not limited thereto. For example, the electronic device 200 may have a structure in which the second housing 220 is slid in or slid out with respect to the first housing 210 along the width direction of the electronic device 200 perpendicular to the length direction (e.g., a horizontal direction) (e.g., the ±x-axis direction).

According to various embodiments, the electronic device 200 may include at least one antenna A disposed through at least a portion of the second side surface member 221 of the second housing 220. In an embodiment, the electronic device 200 may include at least one unit conductive portion 310, 311, or 312 formed by at least one segmentation portion 321, 322, 323, or 324. In an embodiment, the electronic device 200 may include a first conductive portion 310 disposed through a first segmentation portion 321 and a second segmentation portion 322, which are spaced apart at a predetermined interval on the fourth side surface 2211 of the fourth side surface member 221. In an embodiment, the electronic device 200 may include a second conductive portion 311 disposed through the first segmentation portion 321 and a third segmentation portion 323 formed on the fifth side surface 2212. In an embodiment, the electronic device 200 may include a third conductive portion 312 disposed through the second segmentation portion 322 and a fourth segmentation portion 324 formed on the sixth side surface 2213. In an embodiment, at least one of the first conductive portion 310, the second conductive portion 311, or the third conductive portion 312 may be electrically connected to a wireless communication circuit (e.g., the wireless communication module 192 in FIG. 1) of the electronic device 200, and may be used as at least one antenna A operating in at least one predetermined frequency band (e.g., a legacy band or an NR band). For example, the at least one predetermined frequency band may include a range of about 600 MHz to 9000 MHz.

FIG. 4 is an exploded perspective view of an electronic device according to various embodiments of the disclosure.

In describing the electronic device 200 of FIG. 4, components that are substantially the same as those of the electronic device 200 of FIGS. 2A to 3B may be assigned with the same reference numerals, and a detailed description thereof may be omitted.

Referring to FIG. 4, the electronic device 200 may include a first housing 210 (e.g., a book cover) including a first space 2101, a second housing 220 (e.g., a slide housing) that is coupled to be slidable from the first housing 210 and includes a second space 2201, a support member 240 that is fixed to at least a portion of the second housing 220 and is at least partially accommodated in a bending manner in the first space 2101 according to a slide-in operation, a flexible display 230 that is disposed to be supported by at least a portion of the support member 240 and the second housing 220, and a drive module (e.g., a drive mechanism) that drives the second housing 220 from the first housing 210 in the slide-in direction (e.g., the -y-axis direction) and/or the slide-out direction (e.g., the y-axis direction). In an embodiment, the first housing 210 may include a first side surface member 211 and a first rear surface cover 213 coupled with at least a portion of the first side surface member 211 (e.g., at least a portion of the first extension member 212). In an embodiment, the second housing 220 may include a second side surface member 221 and a second rear surface cover 223 coupled with at least a portion of the second side surface member 221 (e.g., at least a portion of the second extension member 222). In an embodiment, the first housing may include a side surface cover 2111a disposed on a first side surface.

According to various embodiments, the drive module may include a drive motor 260 disposed in the first space 2101 and including a pinion gear 261, and a rack gear 2221 disposed in the second space 2201 to be meshed with the pinion gear 261. In an embodiment, the drive module may further include a reduction module (e.g., a reduction gear assembly) disposed to reduce rotational speed and increase driving force by being coupled with the drive motor 260. In an embodiment, the drive motor 260 may be disposed to be supported by a motor bracket 260a disposed on a support bracket 225 disposed in the first space 2101 in the first housing 210. In an embodiment, the drive motor 260 may be fixed to an end (e.g., an edge) of the support bracket 225 in the slide-out direction (e.g., the y-axis direction) in the first space 2101. In an embodiment, the rack gear 2221 may be fixedly disposed on the second extension member 222 of the second housing 220. In some embodiments, the rack gear 2221 may be integrated through injection molding onto at least a portion of the second extension member 222. In an embodiment, the rack gear 2221 may be arranged to have a length in a direction parallel to the sliding direction (e.g., the ±y-axis direction). Therefore, when the electronic device 200 is assembled, the pinion gear 261 may maintain the state of being meshed with the rack gear 2221, and the pinion gear 261 receiving the driving force of the drive motor 260 may be moved along the rack gear 2221, thereby allowing the second housing 220 to be moved with respect to the first housing 210. In an embodiment, the sliding distance of the second housing 220 may be determined by the length of the rack gear 2221.

According to various embodiments, the electronic device 200 may include multiple electronic components disposed in the second space 2201. In an embodiment, the multiple electronic components may include a first circuit board 251 (e.g., a main circuit board), a camera module 216 disposed around the first circuit board 251, a speaker 207, a connector port 208, and/or a microphone 203-1. In an embodiment, since the multiple electronic components are disposed around the first circuit board 251 in the second space 2201 in the second housing 220, efficient electrical connection may be possible. In some embodiments, at least one of the above-described multiple electronic components may be disposed in the first space 2101 in the first housing 210.

According to various embodiments, the electronic device 200 may include a rear bracket 224 disposed between the second extension member 222 and the second rear surface cover 223 in second housing 220. In an embodiment, the rear bracket 224 may be disposed to cover at least some of the multiple electronic components. In an embodiment, the rear bracket 224 may be structurally coupled to at least a portion of the second extension member 222. In some embodiments, the rear bracket 224 may be omitted. In an embodiment, the rear bracket 224 may be disposed to cover the multiple electronic components and to support the second rear surface cover 223. In an embodiment, the rear bracket 224 may include an opening 224a (e.g., a through hole) or a notch area 224c (e.g., a cut portion) provided in an area corresponding to a camera module 216 and/or a sensor module (e.g., the sensor module 217 in FIG. 3B). In an embodiment, the rear bracket 224 may include at least one antenna element 224b. In an embodiment, when the rear bracket 224 is a dielectric injection-molded product (e.g., an antenna carrier), the at least one antenna element 224b may be disposed on the outer surface (e.g., the surface oriented in the - z-axis) of the rear bracket 224. In an embodiment, the at least one antenna element 224b may include a laser direct structuring (LDS) antenna pattern provided on the outer surface of the rear bracket 224. In some embodiments, the at least one antenna element 224b may include a conductive plate attached to the outer surface of the rear bracket 224 or a conductive paint or conductive pattern provided on the outer surface. In some embodiments, the at least one antenna element 224b may be disposed in a built-in manner when the rear bracket 224 is injection-molded. In an embodiment, the at least one antenna element 224b may be configured to transmit or receive a wireless signal in a predetermined frequency band (e.g., a legacy band) by being electrically connected to a wireless communication circuit (e.g., the wireless communication module 192 in FIG. 1) disposed on the first circuit board 251. In an embodiment, the camera module 216 and/or the sensor module 217 may be arranged to detect an external environment through the opening 224a or the notch area 224c. In an embodiment, the second rear surface cover 223 may be processed to be transparent at least in an area corresponding to the camera module 216 and/or the sensor module 217. In some embodiments, the second rear surface cover 223 may include a through hole provided at least in the area corresponding to the camera module 216 and/or the sensor module 217. In this case, the through hole may be covered with a transparent window.

According to various embodiments, the electronic device 200 may include a support bracket 225 disposed in the first space 2101 in the first housing 210. In an embodiment, the support bracket 225 may include a support portion 2252 disposed at one end thereof, wherein the support portion 2252 has a curved outer surface to support the rear surface of the support member 240 that is bent during a sliding operation for transitioning from the slide-out state to the slide-in state. In an embodiment, the support bracket 225 may include a support structure configured to support and fix the drive motor 260 via the motor bracket 260a. In an embodiment, the support bracket 225 may include a battery seat 2251 configured to accommodate a battery. In an embodiment, the drive motor 260 may be disposed at the end (e.g., an edge) of the support bracket 225 in the slide-out direction (e.g., the y-axis direction). For example, when the assembly of the electronic device 200 is completed, the drive motor 260 may be disposed at a position relatively closer to the first circuit board 251 among the electronic components disposed in the first housing 210, thereby helping to minimize the size and/or the length of the flexible circuit board F1 (e.g., a flexible printed circuit board (FPCB)) electrically interconnecting the first circuit board 251 and the drive motor 260. In an embodiment, the electronic device 200 may include a pair of guide rails 226 disposed on opposite side surfaces of the support bracket 225 to guide the opposite ends of the support member 240 in the sliding direction.

According to various embodiments, the electronic device 200 may include a second circuit board 252 (e.g., a sub-circuit board) and an antenna member 253 disposed between the first extension member 212 and the first rear surface cover 213 in the first housing 210. In an embodiment, the second circuit board 252 and the antenna member 253 may be disposed on at least a portion of the first extension member 212. In an embodiment, the second circuit board 252 and the antenna member 253 may be electrically connected to the first circuit board 251 via at least one electrical connection member (e.g., a flexible printed circuit board (FPCB) or a flexible RF cable (FRC)). In an embodiment, the antenna member 253 may include a multi-function coil or multi-function core (MFC) antenna configured to execute a wireless charging function, a neat field communication (NFC) function, and/or an electronic payment function. In some embodiments, the antenna member 253 may be electrically connected to the first circuit board 251 via the second circuit board 252 by being electrically connected to the second circuit board 252. In some embodiments, the second circuit board 252 and/or the antenna member 253 may be electrically connected to the second circuit board 251 via at least a portion of the flexible circuit board F1 connecting the drive motor 260 and the first circuit board 251 to each other.

According to various embodiments, the electronic device 200 may include a movement distance detection sensor 500 disposed in the second space 2201 and a detection target member M disposed in the first space 2101 to correspond to the movement distance detection sensor 500. In an embodiment, the detection target member M may include a magnet or an electromagnet. In an embodiment, the movement distance detection sensor 500 may detect a movement distance resulting from the movement of the second housing 220 (e.g., a sliding movement distance of the second housing) by detecting the magnetic force of the detection target member M, and may provide detection information to a processor (e.g., the processor 120 of FIG. 1) of the electronic device 200. In some embodiments, the movement distance detection sensor 500 may be disposed in the first space 2101, and the detection target member M may be disposed in the second space 2201.

According to various embodiments, the electronic device 200 may include a position holding structure configured to maintain the slide-in state or the slide-out state of the electronic device 200. In an embodiment, the position holding structure may include at least one magnet disposed in the first housing 210. In an embodiment, the at least one magnet may include a first magnet 411 disposed in the first housing and a second magnet 412 disposed apart from the first magnet 411. In an embodiment, the position holding structure may include a third magnet 421 as a first magnetic reaction member disposed in the second housing 220 and positioned to react to the magnetic force of the first magnet 411 in the slide-in state, and a fourth magnet 422 as a second magnetic reaction member disposed to react to the magnetic force of the second magnet 412 in the slide-out state. In some embodiments, the first magnetic reaction member and the second magnetic reaction member may include iron pieces that generate an attractive force with the first magnet 411 and the second magnet 412, respectively. In the slide-in state, the electronic device 200 may maintain the position of the second housing with respect to the first housing through an attractive force between the first magnet 411 and the third magnet 421. In an embodiment, in the slide-out state, the electronic device 200 may maintain the position of the second housing with respect to the first housing through an attractive force between the second magnet 412 and the fourth magnet 422.

The electronic device 200 according to an exemplary embodiment of the disclosure may maintain the position in the slide-in state and the slide-out state through attractive forces of the magnets 411, 412, 421, and 422, which may help reduce damage to the meshed pinion gear 261 and rack gear 2221, which may occur due to external impacts such as a drop.

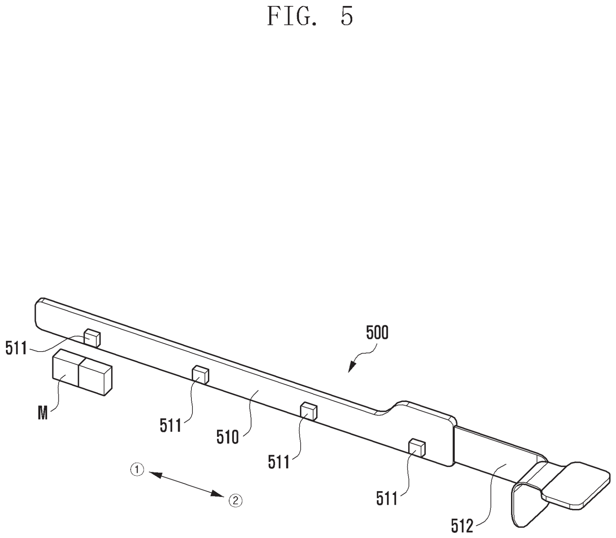

FIG. 5 is a perspective view of a movement distance detection sensor according to various embodiments of the disclosure.

Referring to FIG. 5, the movement distance detection sensor 500 may include a sensor circuit board 510 disposed in the second space 2201 of the second housing (e.g., the second housing 220 of FIG. 4) and at least one sensor module 511 disposed on the sensor circuit board 510. In an embodiment, the sensor circuit board 510 may be disposed to have a length in the direction in which the second housing (e.g., the second housing 220 of FIG. 4) moves (e.g., the ±y-axis direction). In an embodiment, the sensor circuit board 510 may include at least one of a rigid circuit board (e.g., a printed circuit board (PCB)) and a flexible circuit board (e.g., a flexible printed circuit board (FPCB)). In an embodiment, the movement distance detection sensor 500 may include a connector 512 (e.g., an FPCB connector or a wiring member) that extends from the sensor circuit board 510 and is configured to be electrically connected to a first circuit board (e.g., the first circuit board 251 of FIG. 4) disposed in the first housing 210. In an embodiment, the at least one sensor module 511 may include at least one Hall sensor or magnetic reed switch configured to detect magnetic force of at least one magnet M disposed in the first space 2101 of the first housing 210. In an embodiment, the movement distance detection sensor 500 may detect the sliding distance of the second housing 220 moving from the first housing 210. In an embodiment, the movement distance detection sensor 500 may include a capacitance sensor (e.g., a touch sensor) configured to detect at least one conductive member or dielectric structure disposed in the first housing 210 or the second housing 220. In some embodiments, the movement distance detection sensor 500 may include an optical sensor (e.g., a proximity sensor) configured to recognize a plurality of holes or markers formed in or disposed on the first housing 210 or the second housing 220.

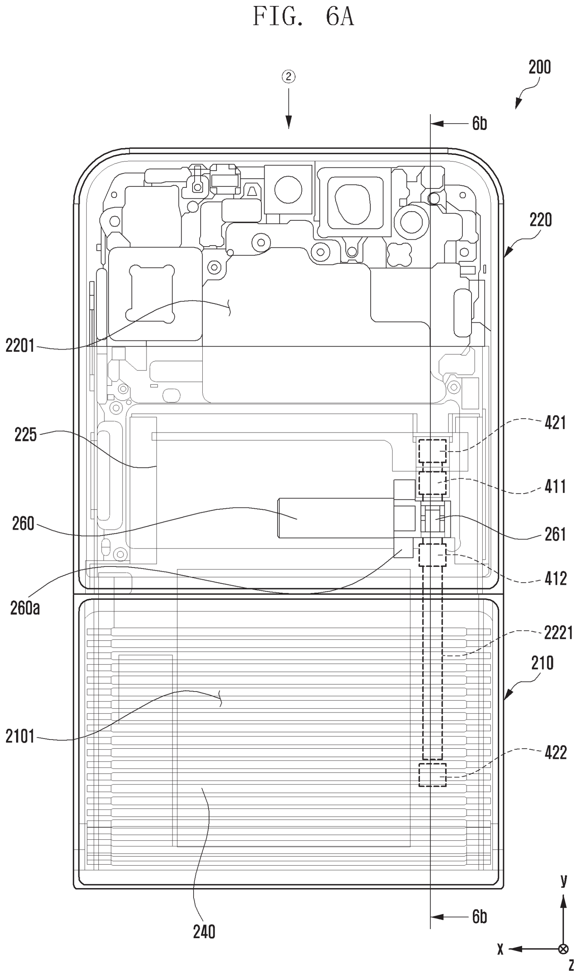

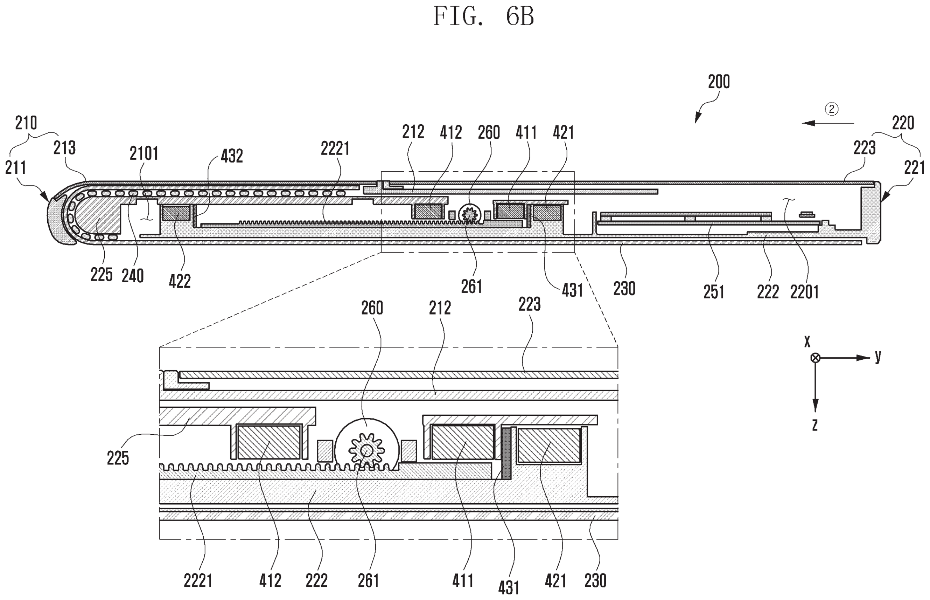

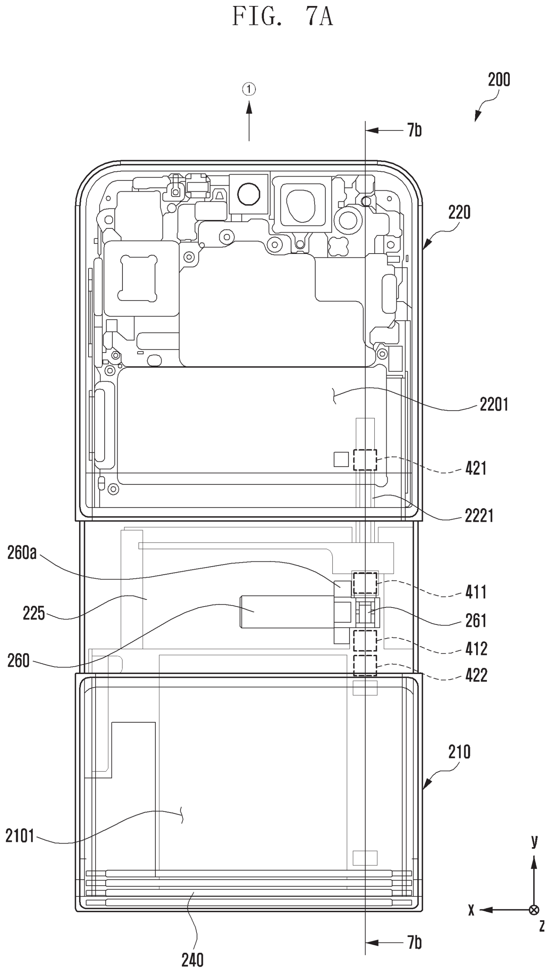

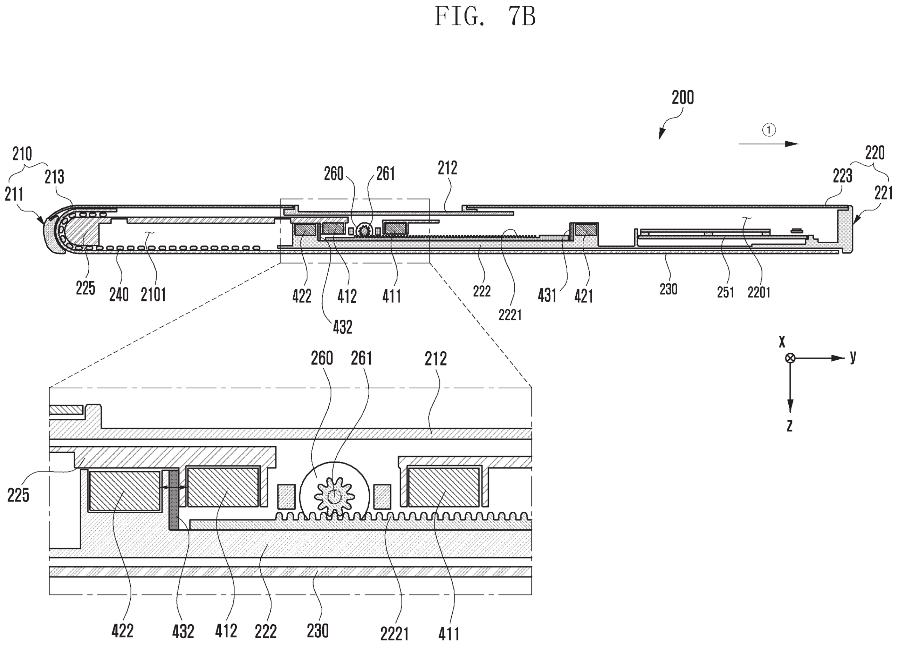

FIG. 6A is a view illustrating a configuration of the electronic device according to various embodiments of the disclosure in the slide-in state. FIG. 6B is a cross-sectional view of the electronic device according to various embodiments of the disclosure taken along line 6b-6b in FIG. 6A. FIG. 7A is a view illustrating a configuration of the electronic device according to various embodiments of the disclosure in the slide-out state. FIG. 7B is a cross-sectional view of the electronic device according to various embodiments of the disclosure, taken along line 7b-7b in FIG. 7A.

Referring to FIGS. 6A to 7B, the electronic device 200 may include a first housing 210 including a first space 2101, a second housing 220 including a second space 2201, a support member 240 connected to the second housing 220 and configured to at least partially accommodated in the first space 2101 in the slide-in state, a flexible display 230 disposed to be supported by at least a portion of the support member 240 and at least a portion of the second housing 220, and a drive motor 260 including a pinion gear 261 disposed in the first space 2101 and meshed with a rack gear 2221 disposed in the second space 2201. In an embodiment, the drive motor 260 may automatically move the second housing 220 in the slide-out direction (direction ①) or the slide-in direction (direction ②) with respect to the first housing 210 through the meshing between the pinion gear 261 and the rack gear 2221.

According to various embodiments, the electronic device 200 may include a first magnet 411 and a second magnet 412 disposed in the first space 2101 of the first housing 210. In an embodiment, the first magnet 411 and the second magnet 412 may be disposed on the support bracket 225 with the drive motor 260 interposed therebetween. In some embodiments, the first magnet 411 and the second magnet 412 may be fixed to the first extension member 212 of the first housing 210. In an embodiment, the electronic device 200 may include a third magnet 421 disposed in the second space 2201 of the second housing 220 and configured to be influenced by the magnetic force of the first magnet 411 in the slide-in state. In an embodiment, the electronic device 200 may include a fourth magnet 422 disposed in the second space 2201 of the second housing 220 and configured to be influenced by the magnetic force of the second magnet 412 in the slide-out state. In an embodiment, the third magnet 421 and the fourth magnet 422 may be fixed to the second extension member 222 of the second housing 220 with the rack gear 2221 interposed therebetween.

According to various embodiments, the slide-in state of the electronic device 200 may be maintained through an attractive force between the first magnet 411 and the third magnet 421. In an embodiment, the slide-out state of the electronic device 200 may be maintained through an attractive force between the second magnet 412 and the fourth magnet 422. In an embodiment, at least one of the first magnet 411, the second magnet 412, the third magnet 421, or the fourth magnet 422 may be replaced with an electromagnet.

According to various embodiments, the electronic device 200 may include, in the second space 2201, a first damper 431 disposed near the third magnet 421 and a second damper 432 disposed near the fourth magnet 422. In an embodiment, the first damper 431 may be disposed between the first magnet 411 and the third magnet 421 in the slide-in state of the electronic device 200, so as to mitigate an impact occurring at the moment when the support bracket 225 and the second extension member 222 come into contact due to the magnetic force. In an embodiment, the second damper 432 may be disposed between the second magnet 412 and the fourth magnet 422 in the slide-out state of the electronic device 200, so as to mitigate an impact occurring at the moment when the support bracket 225 and the second extension member 222 come into contact due to the magnetic force. In an embodiment, the first damper 431 may be fixed to the support bracket 225 between the first magnet 411 and the third magnet 421. In an embodiment, the second damper 432 may be fixed to the support bracket 225 between the second magnet 412 and the fourth magnet 422. In an embodiment, the first damper 431 and the second damper 432 may reduce unintended movement of the housings 210 and 220 relative to each other in the slide-in state or the slide-out state by providing increased frictional force between the support bracket 225 and the second extension member 222. In an embodiment, the first damper 431 and the second damper 432 may include at least one of rubber, urethane, silicone, or sponge.

The electronic device 200 according to an exemplary embodiment of the disclosure may maintain the position in the slide-in state and the slide-out state through attractive forces of the magnets 411, 412, 421, and 422, which may help reduce damage to the meshed pinion gear 261 and rack gear 2221, which may occur due to external impacts such as a drop.

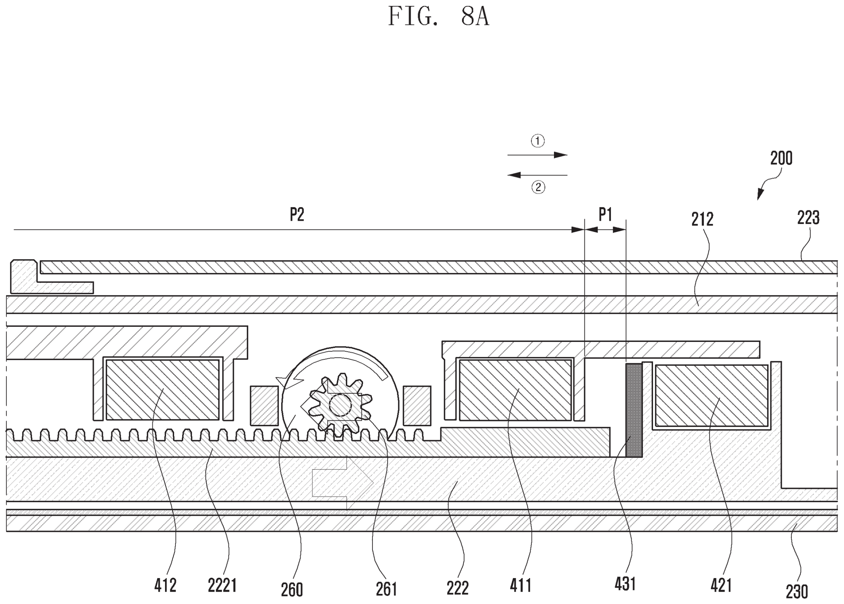

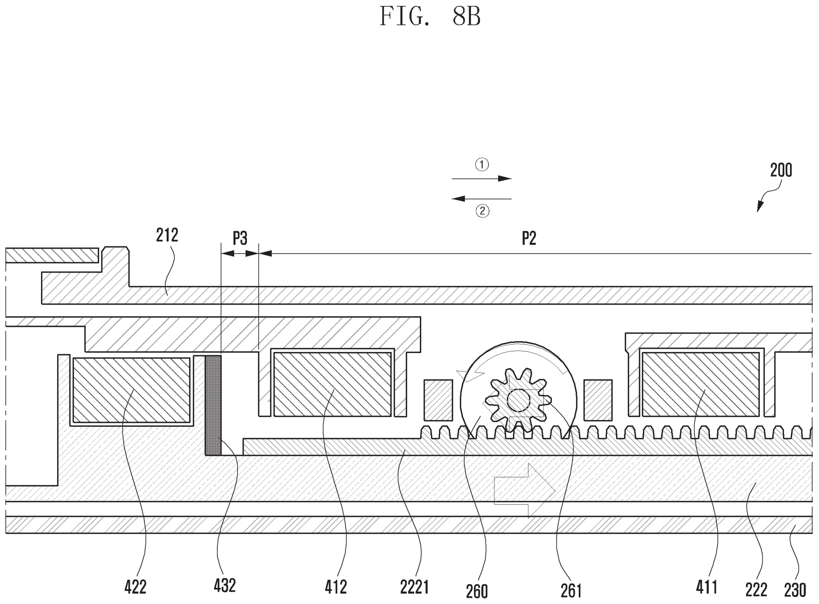

FIG. 8A is a partial cross-sectional view of an electronic device illustrating an initiation time point for transitioning from the slide-in state to the slide-out state according to various embodiments of the disclosure. FIG. 8B is a partial cross-sectional view of the electronic device illustrating a termination time point immediately before transitioning from the slide-in state to the slide-out state according to various embodiments of the disclosure.

In describing the electronic device of FIGS. 8A and 8B, the same reference numerals are used for the same components as those in the electronic device of FIGS. 6B and 7B, and detailed descriptions thereof may be omitted.

Referring to FIGS. 8A and 8B, the electronic device 200 may include a movement section (e.g., a sliding movement section of the second housing 220) in which a transition occurs either from the slide-in state to the slide-out state or from the slide-out state to the slide-in state. In an embodiment, the movement section may include a first magnetic reaction section P1 in which the magnetic forces of the first magnet 411 and the third magnet 421 interact with each other, a no-reaction section P2 in which the first magnet 411 and the second magnet 412 do not interact with the third magnet 421 and the fourth magnet 422, and a second magnetic reaction section P3 in which the magnetic forces of the second magnet 412 and the fourth magnet 422 interact with each other. In an embodiment, the first magnetic reaction section P1 may include a movement distance of the second housing 220 from the slide-in state to the point at which the second housing enters the non-reaction section P2 where the magnetic forces of the first magnet 411 and the third magnet 421 do not interact. In an embodiment, the non-reaction section P2 may include a movement distance of the second housing 220 in which the first magnet 411 and the second magnet 412 do not interact with the third magnet 421 and the fourth magnet 422. In an embodiment, the second magnetic reaction section P3 may include a movement distance of the second housing 220 from the point at which the magnetic forces of the second magnet 412 and the fourth magnet 422 interact with each other to the slide-out state.

According to various embodiments, a driving force and/or a rotational speed of a drive motor (e.g., the drive motor 260 of FIG. 4) may be controlled to be different in the first magnetic reaction section P1, the non-reaction section P2, and the second magnetic reaction section P3. For example, the drive motor (e.g., the drive motor 260 of FIG. 4) may require a driving force relatively stronger than that corresponding to the non-reaction section P2 in order to overcome the attractive force between the first magnet 411 and the third magnet 421 during the first magnetic reaction section P1. In an embodiment, the drive motor (e.g., the drive motor 260 of FIG. 4) may require a driving force and/or a rotational speed relatively weaker and/or slower than that corresponding to the non-reaction section P2 in order to overcome the attractive force between the second magnet 412 and the fourth magnet 422 during the second magnetic reaction section P3.

According to various embodiments, a processor (e.g., the processor 120 of FIG. 1) of the electronic device 200 may be configured to detect a movement distance of the second housing 220 (e.g., the first magnetic reaction section P1, the non-reaction section P2, and the second magnetic reaction section P3) through a movement distance detection sensor (e.g., the movement distance detection sensor 500 of FIG. 4), and to adjust the driving force and/or the rotational speed of the drive motor (e.g., the drive motor 260 of FIG. 4) through a drive motor control module (e.g., the drive motor control module 181 of FIG. 1). In an embodiment, when the drive motor (e.g., the drive motor 260 of FIG. 4) is a DC motor, the processor (e.g., the processor 120 of FIG. 1) may control the driving force of the drive motor (e.g., the drive motor 260 of FIG. 4) by adjusting voltage for each section. In an embodiment, the processor (e.g., the processor 120 of FIG. 1) may control the rotational speed of the drive motor (e.g., the drive motor 260 of FIG. 4) through control of a pulse width modulation (PWM) signal when the drive motor (e.g., the drive motor 260 of FIG. 4) is a stepping motor.

The electronic device 200 according to exemplary embodiments of the disclosure may improve operational reliability by moving at a predetermined (e.g., constant) speed in the first magnetic reaction section P1, the non-reaction section P2, and the second magnetic reaction section P3 through control of a driving force of the drive motor (e.g., the drive motor 260 of FIG. 4).

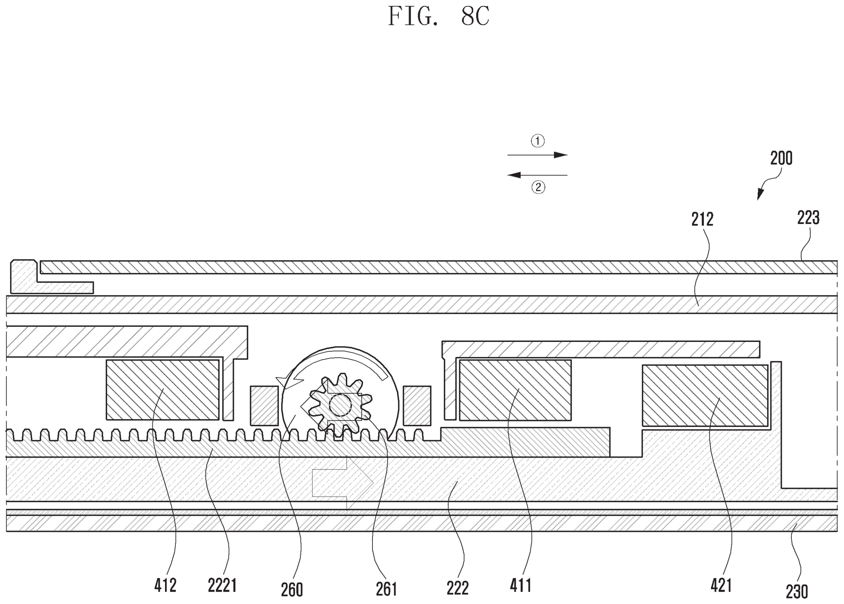

FIG. 8C is a view illustrating an arrangement structure of magnets according to various embodiments of the disclosure.

Referring to FIG. 8C, no support structure may be disposed in the direction in which the magnets 411 and 421 face each other. For example, no support structure may be provided between the first magnet 411 and the third magnet 421. In such a case, a first damper (e.g., the first damper of FIG. 8A) disposed between the first magnet 411 and the third magnet 421 may be omitted. In an embodiment, this arrangement structure of the magnets 411 and 421 may enable the reaction caused by the magnetic force between the two magnets 411 and 421 to be more sensitively induced. In an embodiment, the second magnet 412 and the fourth magnet (e.g., the fourth magnet 422 of FIG. 8B) may also have substantially the same arrangement structure.

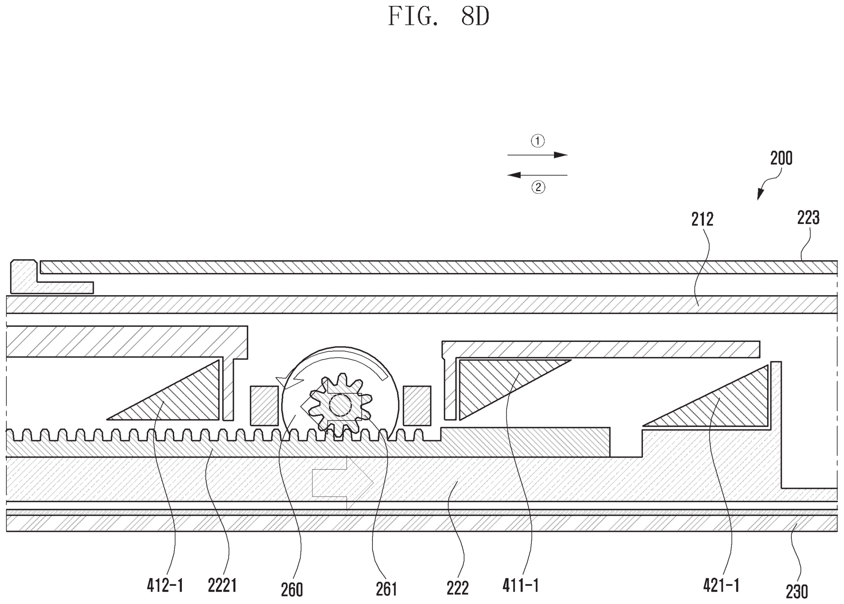

FIG. 8D is a view illustrating modified shapes of magnets according to various embodiments of the disclosure.

Referring to FIG. 8D, a first magnet 411-1 and a third magnet 421-1 may have a triangular shape. In an embodiment, a second magnet 412-1 and a fourth magnet (e.g., the fourth magnet 422 of FIG. 8B) may also have substantially the same shape. In some embodiments, the magnets 411-1, 421-1, and 412-1 may have various shapes (e.g., rectangular, square, circular, elliptical, or polygonal) for efficient placement in an inner space of the electronic device 200.

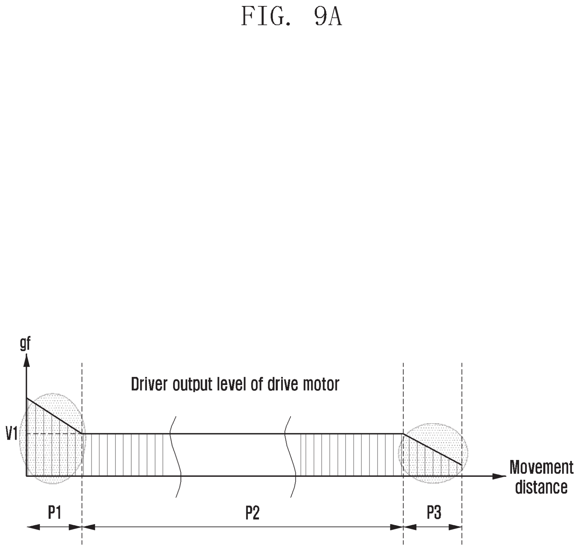

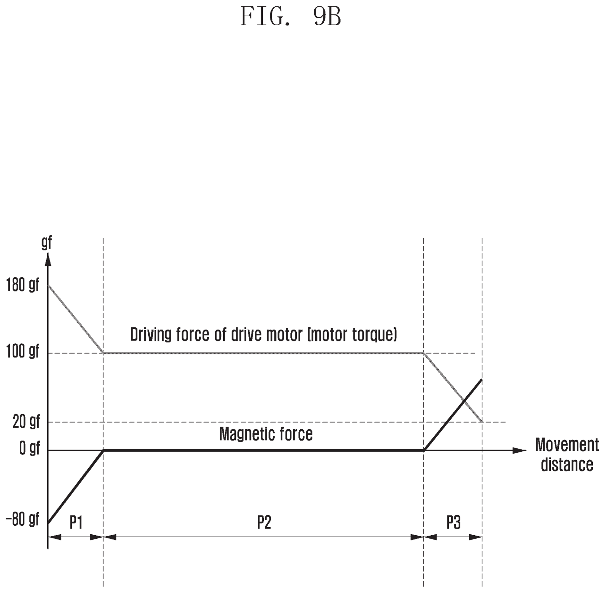

FIG. 9A is a graph illustrating a change in a driver output level of the drive motor depending on a movement section of the second housing, according to various embodiments of the disclosure. FIG. 9B is a graph illustrating a change in a driving force of the drive motor depending on a movement section of the second housing, according to various embodiments of the disclosure.

Referring to FIGS. 9A and 9B and the above-described drawings, the electronic device 200 (e.g., the processor 120 of FIG. 1) may adjust an output level of a drive motor driver depending on a movement distance of the second housing 220. In an embodiment, the electronic device 200 may detect the first magnetic reaction section P1 when the second housing 220 moves in a slide-out direction from the slide-in state, through the movement distance detection sensor 500. In an embodiment, in the first magnetic reaction section P1, the electronic device 200 may control the drive motor 260 through the drive motor control module 181 to generate a driving force capable of overcoming an attractive force between the first magnet 411 and the third magnet 421 by adjusting the output level so that a voltage higher than a reference voltage V1 is applied. For example, the electronic device 200 may control the drive motor 260 to operate with a driving force of at least 180 gf in the first magnetic reaction section P1 when the driving force of the drive motor 260 corresponding to the reference voltage V1 is 100 gf and the attractive force between the first magnet 411 and the third magnet 421 is about 80 gf. In an embodiment, in the first magnetic reaction section P1, since the attractive force between the first magnet 411 and the third magnet 421 decreases as the second housing 220 moves in the slide-out direction, the electronic device 200 may gradually decrease the voltage to help the second housing 220 move at a predetermined speed.

According to various embodiments, the electronic device 200 may control the driving force of the drive motor 260 by adjusting the output level to apply the reference voltage V1 while detecting the non-reaction section P2 in which none of the magnets 411, 412, 421, and 422 interact with each other. In an embodiment, the electronic device 200 may detect the second magnetic reaction section P3, which corresponds to a section between the end of the non-reaction section P2 and the slide-out state, as the second housing 220 continues to move in the slide-out direction. In an embodiment, in the second magnetic reaction section P3, the electronic device 200 may control the drive motor 260 through the drive motor control module 181 to generate a driving force capable of overcoming an attractive force between the second magnet 412 and the fourth magnet 422 by adjusting the output level so that a voltage lower than the reference voltage is applied. For example, the electronic device 200 may control the drive motor 260 to operate with a driving force of at least 20 gf in the second magnetic reaction section P3 when the driving force of the drive motor 260 corresponding to the reference voltage V1 is 100 gf and the attractive force between the second magnet 412 and the fourth magnet 422 is about 80 gf. In an embodiment, in the second magnetic reaction section P3, since the attractive force between the second magnet 412 and the fourth magnet 422 increases as the second housing 220 moves, the electronic device 200 may gradually decrease the voltage to help the second housing 220 move at a predetermined speed to the slide-out state.

Although not illustrated, when transitioning from the slide-out state to the slide-in state, the electronic device 200 may also, by adjusting the output level of the drive motor driver in the same manner as described above, control the driving force of the drive motor 260 so that the second housing moves at a predetermined speed across the entire movement section.

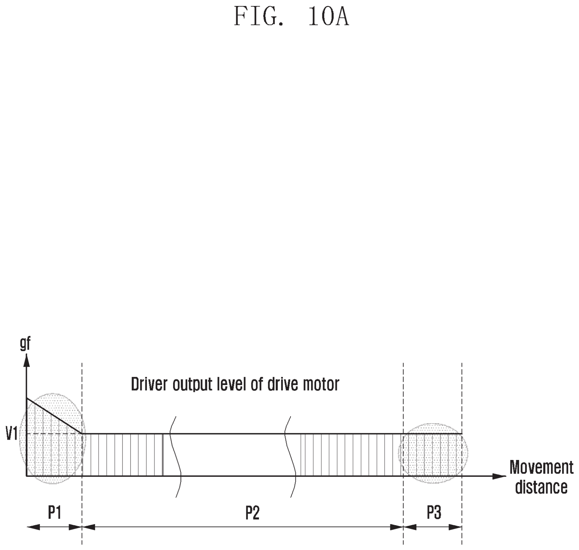

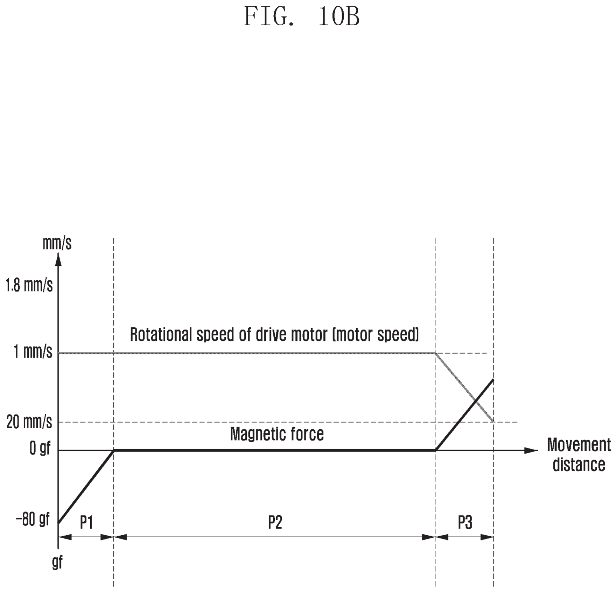

FIG. 10A is a graph illustrating a change in a driver output level of the drive motor depending on a movement section of the second housing, according to various embodiments of the disclosure. FIG. 10B is a graph illustrating a change in a rotational speed of the drive motor depending on a movement section of the second housing, according to various embodiments of the disclosure.

Referring to FIGS. 10A and 10B, in the first magnetic reaction section P1, the electronic device 200 may control the drive motor 260 through the drive motor control module 181 to generate a driving force capable of overcoming an attractive force between the first magnet 411 and the third magnet 421 by adjusting the output level so that a voltage higher than a reference voltage V1 is applied. In an embodiment, the electronic device 200 may control the driving force of the drive motor 260 by adjusting the output level to apply the reference voltage V1 while detecting the non-reaction section P2 in which none of the magnets 411, 412, 421, and 422 interact with each other. In an embodiment, the electronic device 200 may detect the second magnetic reaction section P3, which corresponds to a section between the end of the non-reaction section P2 and the slide-out state, as the second housing 220 continues to move in the slide-out direction. In an embodiment, in the second magnetic reaction section P3, the electronic device 200 may also adjust the rotational speed of the drive motor 260 by controlling a pulse width modulation (PWM) signal (e.g., a pulse-width modulated signal). For example, by reducing the rotational speed of the drive motor 260 in the second magnetic reaction section P3 compared to the rotational speed in the non-reaction section P2, the electronic device 200 may reduce a phenomenon in which the second magnet 412 and the fourth magnet 422 quickly come into contact due to an attractive force therebetween. In some embodiments, the electronic device 200 may reduce both the driving force and the rotational speed of the drive motor 260 in the second magnetic reaction section P3.

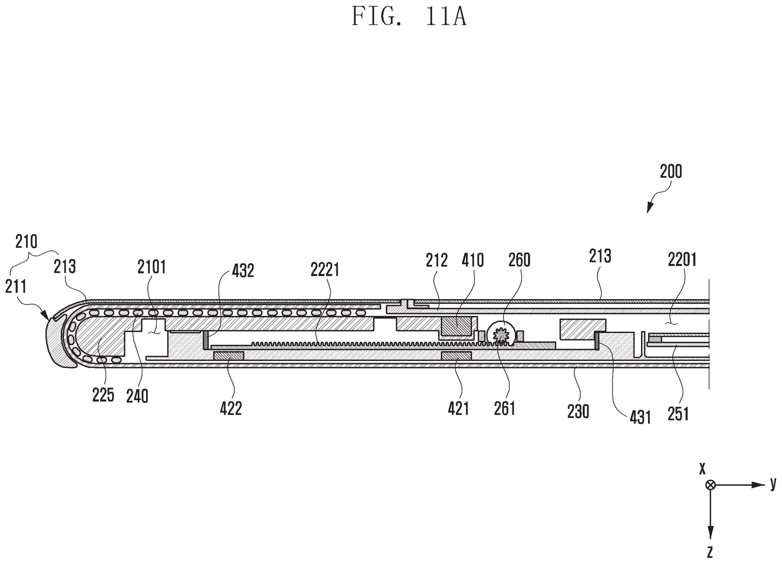

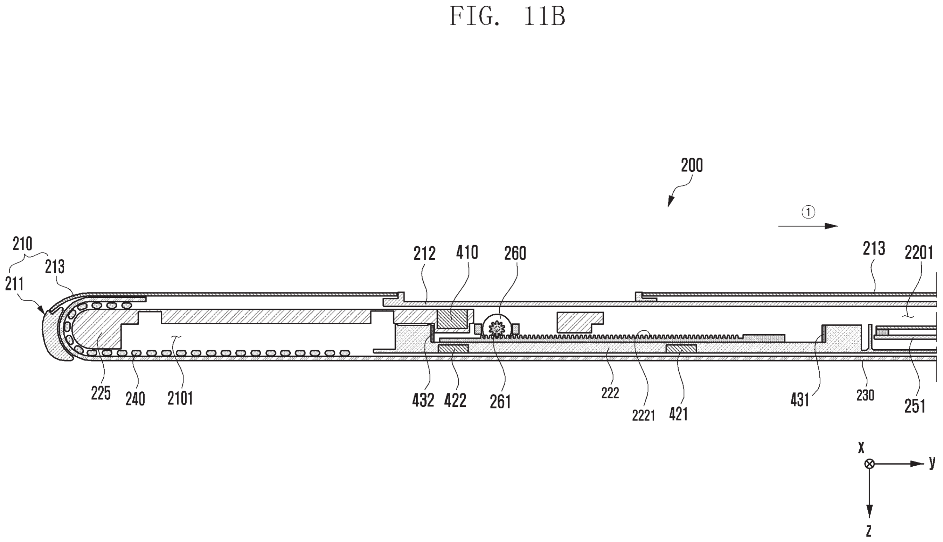

FIG. 11A is a partial cross-sectional view of an electronic device according to various embodiments of the disclosure in the slide-in state. FIG. 11B is a partial cross-sectional view of the electronic device according to various embodiments of the disclosure in the slid-out state.

In describing the electronic device of FIGS. 11A and 11B, the same reference numerals are used for substantially the same components as those in the electronic device of FIGS. 6B and 7B, and detailed descriptions thereof may be omitted.

Referring to FIGS. 11A and 11B, the above-described first magnet 411 and second magnet 412 may be replaced with a single first magnet 410 disposed on a support bracket 225 of the first housing 210. In this case, the third magnet 421 may be disposed at a position within a magnetic reaction section of the single first magnet 410 when the electronic device 200 is in the slide-in state. In an embodiment, the fourth magnet 422 may be disposed at a position within the magnetic reaction section of the single first magnet 410 when the electronic device 200 is in the slide-out state.

According to an exemplary embodiment of the disclosure, some of the magnets 410, 411, 412, 421, and 422 may be replaced with iron pieces that react to magnetic force. In an embodiment, the first magnet 411 facing the third magnet 421 or the third magnet 421 facing the first magnet 411 may be replaced with an iron piece. In some embodiments, the second magnet 412 facing the fourth magnet 422 or the fourth magnet 422 facing the second magnet 412 may be replaced with an iron piece.

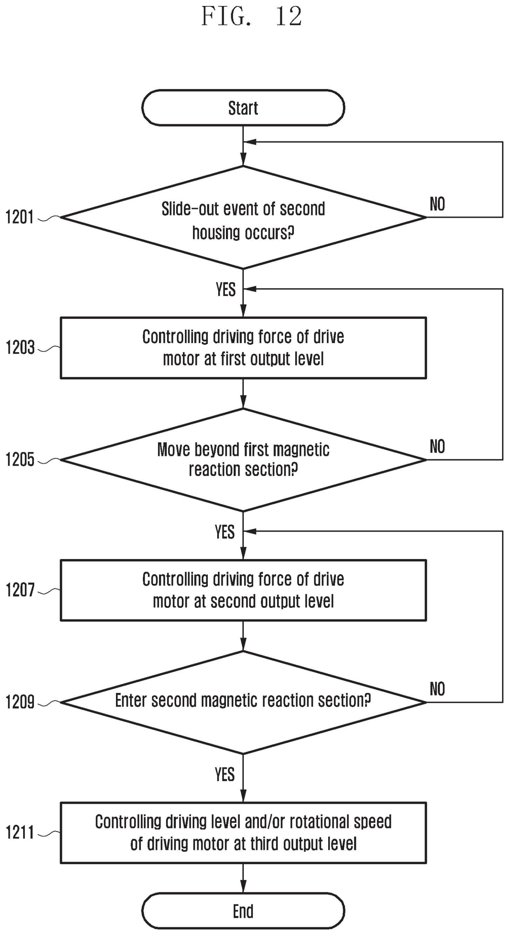

FIG. 12 is a flowchart illustrating control of a drive motor when transitioning from the slide-in state to the slide-out state, according to various embodiments of the disclosure.

Referring to FIG. 12 and the drawings described above, in operation 1201, a processor (e.g., the processor 120 of FIG. 1) of an electronic device 200 (hereinafter, referred to as the "electronic device") may detect whether a slide-out event of the second housing 220 occurs. For example, the electronic device 200 may detect the slide-out event by recognizing at least one operation, from among an operation of pressing a button exposed on the first housing 210 or the second housing 220, an operation of touching an object displayed on the flexible display 230, or an operation of receiving a voice command, as a triggering action for transitioning from the slide-in state to the slide-out state.

In operation 1203, the electronic device 200 may control the driving force of the drive motor 260 at a first output level. In an embodiment, the slide-in state of the electronic device 200 may be maintained by the attractive force between the first magnet 411 and the third magnet 421 which are in contact with each other. Accordingly, the electronic device 200 may detect that the second housing 220 is positioned in the first magnetic reaction section P1 using the movement distance detection sensor 500, and may, by adjusting the output level so that a voltage higher than the reference voltage is applied through the drive motor control module 181, control the drive motor 260 to generate a driving force capable of overcoming the attractive force between the first magnet 411 and the third magnet 421. Accordingly, the second housing 220 may start to move from the slide-in state in the slide-out direction by the increased driving force of the drive motor 260.

In operation 1205, the electronic device 200 may detect whether the second housing 220 moves beyond the first magnetic reaction section P1 using the movement distance detection sensor 500. In an embodiment, when detecting that the second housing 220 does not move beyond the first magnetic reaction section P1, the electronic device 200 may control the driving force of the drive motor 260 by gradually decreasing the voltage in accordance with the movement of the second housing 220.

In operation 1207, upon detecting that the second housing 220 moves beyond the first magnetic reaction section P1 and enters the non-reaction section P2, the electronic device 200 may control the driving force of the drive motor 260 at a second output level. This may indicate that the second housing 220 enters the non-reaction section P2, in which the first magnet 411 and the second magnet 412 do not react to the magnetic force of the third magnet 421 and the fourth magnet 422, and the second output level may be lower than the first output level.

In operation 1209, the electronic device 200 may detect whether the second housing 220 moves beyond the non-reaction section P2 and enters the second magnetic reaction section P3. For example, upon detecting that the second housing 220 does not enter the second magnetic reaction section P3, the electronic device 200 may control the driving force of the drive motor 260 to remain constant by maintaining a uniform voltage.

In operation 1211, upon detecting that the second housing 220 moves beyond the non-reaction section P2 and enters the second magnetic reaction section P3, the electronic device 200 may control the driving force of the drive motor 260 at a third output level. In an embodiment, the third output level may be lower than at least the second output level. In this case, as the attractive force between the second magnet 412 and the fourth magnet 422 gradually increases in accordance with the movement of the second housing 220 toward the slide-out state, the drive motor 260 may be controlled to gradually reduce the voltage so that the driving force decreases. In some embodiments, in the second magnetic reaction section P3, the electronic device 200 may also adjust the rotational speed of the drive motor 260 by controlling a pulse width modulation (PWM) signal (e.g., a pulse-width modulated signal). For example, by reducing the rotational speed of the drive motor 260 in the second magnetic reaction section P3 compared to the rotational speed in the non-reaction section P2, the electronic device 200 may reduce a phenomenon in which the second magnet 412 and the fourth magnet 422 quickly come into contact due to an attractive force therebetween. In some embodiments, the rotational speed of the drive motor 260 may gradually decrease in the second magnetic reaction section P3.

According to an exemplary embodiment of the disclosure, when transitioning from the slide-in state to the slide-out state, the electronic device 200 may adjust the output level of the drive motor 260 for each magnetic reaction section, so as to control the second housing 220 to move at a predetermined speed throughout the entire movement section.

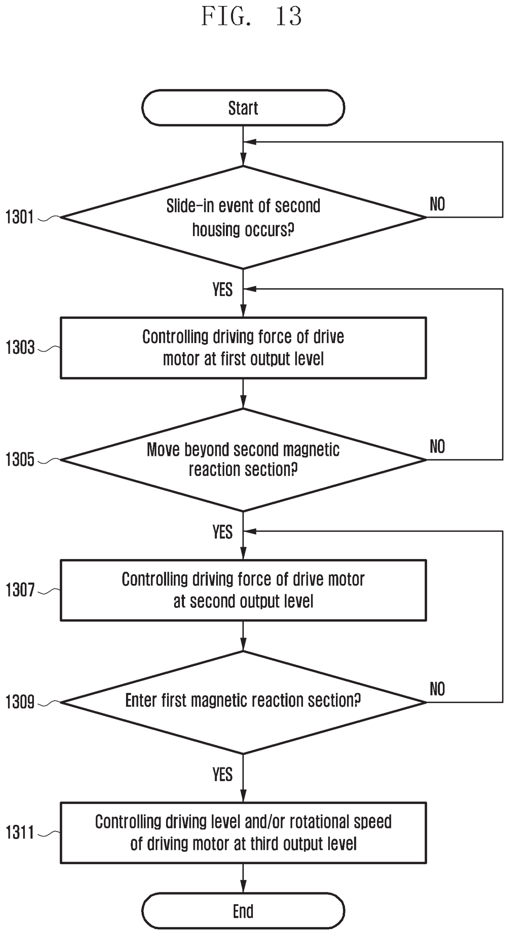

FIG. 13 is a flowchart illustrating control of the drive motor when transitioning from the slide-out state to the slide-in state, according to various embodiments of the disclosure.

Referring to FIG. 13 and the drawings described above, in operation 1301, a processor (e.g., the processor 120 of FIG. 1) of an electronic device 200 (hereinafter, referred to as the "electronic device") may detect whether a slide-in event of the second housing 220 occurs. For example, the electronic device 200 may detect the slide-in event by recognizing at least one operation, from among an operation of pressing a button exposed on the first housing 210 or the second housing 220, an operation of touching an object displayed on the flexible display 230, or an operation of receiving a voice command, as a triggering action for transitioning from the slide-out state to the slide-in state.

In operation 1303, the electronic device 200 may control the driving force of the drive motor 260 at a first output level. In an embodiment, the slide-out state of the electronic device 200 may be maintained by the attractive force between the second magnet 412 and the fourth magnet 422 which are in contact with each other. Accordingly, the electronic device 200 may detect that the second housing 220 is positioned in the second magnetic reaction section P3 using the movement distance detection sensor 500, and may, by adjusting the output level so that a voltage higher than the reference voltage is applied through the drive motor control module 181, control the drive motor 260 to generate a driving force capable of overcoming the attractive force between the second magnet 412 and the fourth magnet 422 Accordingly, the second housing 220 may start to move from the slide-out state in the slide-in direction by the increased driving force of the drive motor 260.

In operation 1305, the electronic device 200 may detect whether the second housing 220 moves beyond the second magnetic reaction section P3 using the movement distance detection sensor 500. In an embodiment, when detecting that the second housing 220 does not move beyond the second magnetic reaction section P3, the electronic device 200 may control the driving force of the drive motor 260 by gradually decreasing the voltage in accordance with the movement of the second housing 220.

In operation 1307, upon detecting that the second housing 220 moves beyond the second magnetic reaction section P3 and enters the non-reaction section P2, the electronic device 200 may control the driving force of the drive motor 260 at a second output level. This may indicate that the second housing 220 enters the non-reaction section P2, in which the first magnet 411 and the second magnet 412 do not react to the magnetic force of the third magnet 421 and the fourth magnet 422, and the second output level may be lower than the first output level.

In operation 1309, the electronic device 200 may detect whether the second housing 220 moves beyond the non-reaction section P2 and enters the first magnetic reaction section P1. For example, upon detecting that the second housing 220 does not enter the first magnetic reaction section P1, the electronic device 200 may control the driving force of the drive motor 260 to remain constant by maintaining a uniform voltage.

In operation 1311, upon detecting that the second housing 220 moves beyond the non-reaction section P2 and enters the first magnetic reaction section P1, the electronic device 200 may control the driving force of the drive motor 260 at a third output level. In an embodiment, the third output level may be lower than at least the second output level. In this case, as the attractive force between the first magnet 411 and the third magnet 421 gradually increases in accordance with the movement of the second housing 220 toward the slide-in state, the drive motor 260 may be controlled to gradually reduce the voltage so that the driving force decreases. In some embodiments, in the first magnetic reaction section P1, the electronic device 200 may also adjust the rotational speed of the drive motor 260 by controlling a pulse width modulation (PWM) signal (e.g., a pulse-width modulated signal). For example, by reducing the rotational speed of the drive motor 260 in the first magnetic reaction section P1 compared to the rotational speed in the non-reaction section P2, the electronic device 200 may reduce a phenomenon in which the first magnet 411 and the third magnet 421 quickly come into contact due to an attractive force therebetween. In some embodiments, the rotational speed of the drive motor 260 may gradually decrease in the first magnetic reaction section P1.

According to an exemplary embodiment of the disclosure, when transitioning from the slide-out state to the slide-in state, the electronic device 200 may adjust the output level of the drive motor 260 for each magnetic reaction section, so as to control the second housing 220 to move at a predetermined speed throughout the entire movement section.

According to an exemplary embodiment of the disclosure, the electronic device 200 may have a pair of position holding structures including the magnets 411, 412, 421, and 422, symmetrically arranged on left and right sides thereof, respectively, which may help smoothly hold positions.

According to various embodiments, an electronic device (e.g., the electronic device 200 of FIG. 4) may include a first housing (e.g., the first housing 210 of FIG. 4), a second housing (e.g., the second housing 220 of FIG. 4) slidably coupled to the first housing, a flexible display (e.g., the flexible display 230 of FIG. 4) disposed to be supported by the first housing and the second housing, a drive motor (e.g., the drive motor 260 of FIG. 4) disposed in the first housing and including a pinion gear (e.g., the pinion gear 261 of FIG. 4), a rack gear (e.g., the rack gear 2221 of FIG. 4) disposed in the second housing and meshed with the pinion gear, at least one magnet (e.g., the first magnet 411 and the second magnet 412 of FIG. 4) disposed in the first housing, a first magnetic reaction member (e.g., the third magnet 421 of FIG. 4) disposed in the second housing and configured to be influenced by a magnetic force of the at least one magnet in a slide-in state, and a second magnetic reaction member (e.g., the fourth magnet 422 of FIG. 4) disposed in the second housing and configured to be influenced by the magnetic force of the at least one magnet in a slide-out state. The second housing may be held in position in the slide-out state and the slide-in state by an attractive force between the at least one magnet and the first and second magnetic reaction members.

According to various embodiments, the first magnetic reaction member and/or the second magnetic reaction member may include a magnet arranged to generate an attractive force with the at least one magnet.

According to various embodiments, the first magnetic reaction member and/or the second magnetic reaction member may include an iron piece arranged to generate an attractive force with the at least one magnet.

According to various embodiments, the electronic device may include a first damper (e.g., the first damper 431 of FIG. 6B) disposed between the at least one magnet (e.g., the first magnet 411 of FIG. 6B) and the first magnetic reaction member (e.g., the third magnet 421 of FIG. 6B) in the slide-in state.

According to various embodiments, the electronic device may include a second damper (e.g., the second damper 432 of FIG. 7B) disposed between the at least one magnet (e.g., the second magnet 412 of FIG. 7B) and the second magnetic reaction member (e.g., the fourth magnet 422 of FIG. 7B) in the slide-out state.

According to various embodiments, the first damper and the second damper may include at least one of rubber, urethane, silicone, or sponge.

According to various embodiments, the electronic device may include a movement distance detection sensor (e.g., the movement distance detection sensor 500 of FIG. 5) configured to detect a movement distance of the second housing, and at least one processor (e.g., the processor 120 of FIG. 1) configured to control a driving force of the drive motor in response to a movement section of the second housing detected by the movement distance detection sensor.

According to various embodiments, the at least one processor may be configured to control a driving force of the drive motor at a first output level in a first magnetic reaction section (e.g., the first magnetic reaction section P1 of FIG. 8A) in which the second housing (e.g., the second housing 220 of FIG. 6B) moves from a position corresponding to the slide-in state to a position where an attractive force between the at least one magnet (e.g., the first magnet 411 of FIG. 6B) and the first magnetic reaction member (e.g., the third magnet 421 of FIG. 6B) disappears.

According to various embodiments, the first output level may be gradually decreased in accordance with movement of the second housing.

According to various embodiments, the at least one processor may be configured to control a driving force of the drive motor at a second output level, which is lower than at least the first output level, in a non-reaction section (e.g., the non-reaction section P2 of FIG. 8B) in which the second housing (e.g., the second housing 220 of FIG. 7B) moves from the first magnetic reaction section to a position immediately before an attractive force begins between the at least one magnet (e.g., the second magnet 412 of FIG. 7B) and the second magnetic reaction member (e.g., the fourth magnet 422 of FIG. 7B).

According to various embodiments, the at least one processor may be configured to control a driving force of the drive motor at a third output level, which is lower than at least the second output level, in a second magnetic reaction section (e.g., the second magnetic reaction section P3 of FIG. 8B) in which the second housing (e.g., the second housing 220 of FIG. 7B) moves from the non-reaction section to a position corresponding to the slide-out state.

According to various embodiments, the third output level may be gradually decreased in accordance with movement of the second housing.

According to various embodiments, the at least one processor may be configured to control a rotational speed of the drive motor to be lower in a second magnetic reaction section, in which the second housing moves from the non-reaction section to a position corresponding to the slide-out state, than in the non-reaction section.

According to various embodiments, the rotational speed of the drive motor in the second magnetic reaction section may be gradually decreased in accordance with movement of the second housing.

According to various embodiments, the drive motor may include a DC motor or a stepping motor.

According to various embodiments, an electronic device (e.g., the electronic device 200 of FIG. 4) may include a first housing (e.g., the first housing 210 of FIG. 4), a second housing (e.g., the second housing 220 of FIG. 4) slidably coupled to the first housing, a flexible display (e.g., the flexible display 230 of FIG. 4) disposed to be supported by the first housing and the second housing and having a display area variable depending on the slide-in or slide-out of the second housing, a drive motor (e.g., the drive motor 260 of FIG. 4) disposed in the first housing and including a pinion gear (e.g., the pinion gear 261 of FIG. 4), a rack gear (e.g., the rack gear 2221 of FIG. 4) disposed in the second housing and meshed with the pinion gear, at least one magnet (e.g., the first magnet 411 and the second magnet 412 of FIG. 4) disposed in the first housing, a first magnetic reaction member (e.g., the third magnet 421 of FIG. 4) disposed in the second housing and configured to be influenced by a magnetic force of the at least one magnet in the slide-in state, a second magnetic reaction member (e.g., the fourth magnet 422 of FIG. 4) disposed in the second housing and configured to be influenced by the magnetic force of the at least one magnet in the slide-out state, a movement distance detection sensor (e.g., the movement distance detection sensor 500 of FIG. 4) configured to detect a movement distance of the second housing, and at least one processor (e.g., the processor 120 of FIG. 1) configured to control a driving force of the drive motor in response to a movement section of the second housing detected by the movement distance detection sensor.

According to various embodiments, the at least one processor may be configured to control a driving force of the drive motor at a first output level in a first magnetic reaction section (e.g., the first magnetic reaction section P1 of FIG. 8A) in which the second housing (e.g., the second housing 220 of FIG. 6B) moves from a position corresponding to the slide-in state to a position where an attractive force between the at least one magnet (e.g., the first magnet 411 of FIG. 6B) and the first magnetic reaction member (e.g., the third magnet 421 of FIG. 6B) disappears.

According to various embodiments, the at least one processor may be configured to control a driving force of the drive motor at a second output level, which is lower than at least the first output level, in a non-reaction section (e.g., the non-reaction section P2 of FIG. 8B) in which the second housing (e.g., the second housing 220 of FIG. 7B) moves from the first magnetic reaction section to a position immediately before an attractive force begins between the at least one magnet (e.g., the second magnet 412 of FIG. 7B) and the second magnetic reaction member (e.g., the fourth magnet 422 of FIG. 7B).

According to various embodiments, the at least one processor may be configured to control a driving force of the drive motor at a third output level, which is lower than at least the second output level, in a second magnetic reaction section (e.g., the second magnetic reaction section P3 of FIG. 8B) in which the second housing (e.g., the second housing 220 of FIG. 7B) moves from the non-reaction section to a position corresponding to the slide-out state.

According to various embodiments, the at least one processor may be configured to control a rotational speed of the drive motor to be lower in a second magnetic reaction section, in which the second housing moves from the non-reaction section to a position corresponding to the slide-out state, than in the non-reaction section.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure. Accordingly, the scope of various embodiments of the disclosure is to be construed as including all changes or modifications derived based on the technical idea of the various embodiments of the disclosure in addition to the embodiments disclosed herein.

## Claims

1. An electronic device (200) comprising:
a first housing (210);
a second housing (220) slidably coupled to the first housing;
a flexible display (230) disposed to be supported by the first housing and the second housing;
a drive motor (260) disposed in the first housing and comprising a pinion gear (261);
a rack gear (2221) disposed in the second housing and meshed with the pinion gear;
at least one magnet (411, 412) disposed in the first housing;
a first magnetic reaction member (421) disposed in the second housing and configured to be influenced by a magnetic force of the at least one magnet in a slide-in state; and
a second magnetic reaction member (422) disposed in the second housing and configured to be influenced by the magnetic force of the at least one magnet in a slide-out state,
wherein the second housing is held in position in the slide-out state and the slide-in state by an attractive force between the at least one magnet and the first and second magnetic reaction members.

2. The electronic device of claim 1, wherein the first magnetic reaction member and/or the second magnetic reaction member comprises a magnet arranged to generate an attractive force with the at least one magnet.

3. The electronic device of claim 1, wherein the first magnetic reaction member and/or the second magnetic reaction member comprises an iron piece arranged to generate an attractive force with the at least one magnet.

4. The electronic device of any one of claims 1 to 3, further comprising:
a first damper (431) disposed between the at least one magnet (411) and the first magnetic reaction member (421) in the slide-in state.

5. The electronic device of any one of claims 1 to 4, further comprising:
a second damper (432) disposed between the at least one magnet (412) and the second magnetic reaction member (422) in the slide-out state.

6. The electronic device of claim 5, wherein the first damper and the second damper comprise at least one of rubber, urethane, silicone, or sponge.

7. The electronic device of any one of claims 1 to 6, further comprising:
a movement distance detection sensor (500) configured to detect a movement distance of the second housing; and
at least one processor (120) configured to control a driving force of the drive motor in response to a movement section of the second housing detected by the movement distance detection sensor.

8. The electronic device of claim 7, wherein the at least one processor is configured to:
control the driving force of the drive motor at a first output level in a first magnetic reaction section (P1) in which the second housing (220) moves from a position corresponding to the slide-in state to a position where an attractive force between the at least one magnet (411) and the first magnetic reaction member (421) disappears.

9. The electronic device of claim 8, wherein the first output level is gradually decreased in accordance with movement of the second housing.

10. The electronic device of claim 8 or 9, wherein the at least one processor is configured to:
control the driving force of the drive motor at a second output level lower than at least the first output level in a non-reaction section (P2) in which the second housing (220) moves from the first magnetic reaction section to a position immediately before an attractive force begins between the at least one magnet (412) and the second magnetic reaction member (422).

11. The electronic device of claim 10, wherein the at least one processor is configured to:
control a driving force of the drive motor at a third output level lower than at least the second output level in a second magnetic reaction section (P3) in which the second housing (220) moves from the non-reaction section to a position corresponding to the slide-out state.

12. The electronic device of claim 11, wherein the third output level is gradually decreased in accordance with movement of the second housing.

13. The electronic device of any one of claims 10 to 12, wherein the at least one processor is configured to:
control a rotational speed of the drive motor to be lower in a second magnetic reaction section, in which the second housing moves from the non-reaction section to a position corresponding to the slide-out state, than in the non-reaction section.

14. The electronic device of claim 13, wherein the rotational speed of the drive motor in the second magnetic reaction section is gradually decreased in accordance with movement of the second housing.

15. The electronic device of any one of claims 1 to 14, wherein the drive motor comprises a DC motor or a stepping motor.
